# EUROPÄISCHE PATENTSCHRIFT

(11) **EP 4 526 369 B1**
(45) Veröffentlichungstag und Bekanntmachung des Hinweises auf die Patenterteilung: **04.03.2026**
(21) Anmeldenummer: 23725996.5
(22) Anmeldetag: 09.05.2023
(51) Int. Cl.: C08G 77/448, C08G 64/18

(54) **POLYSILOXAN-POLYCARBONAT-BLOCKCOKONDESATE AUS SPEZIELL TERMINIERTEN SILOXANBLÖCKEN**
POLYSILOXANE POLYCARBONATE BLOCK COPOLYMERS FROM SPECIALLY TERMINATED SILOXANE BLOCKS
COCONDÉSATS SÉQUENCÉS DE POLYSILOXANE-POLYCARBONATE CONSTITUÉS DE SILOXANES SÉQUENCÉS À TERMINAISON SPÉCIALE

(30) Priorität: 17.05.2022 EP 22173805
(43) Veröffentlichungstag der Anmeldung: 26.03.2025
(73) Patentinhaber: Covestro Deutschland AG, 51373 Leverkusen (DE)
(72) Erfinder: MEYER, Alexander, 40489 Düsseldorf (DE); LIESENFELDER, Ulrich, 51469 Bergisch Gladbach (DE); SCHULZ, Lukas Fabian, 32657 Lemgo (DE); PFINGST, Thomas, 47918 Tönisvorst (DE); WETZEL, Sebastian, 58332 Schwelm (DE)
(74) Vertreter: Levpat
(86) Internationale Anmeldenummer: PCT/EP2023/062220
(87) Internationale Veröffentlichungsnummer: WO 2023/222443

(56) Entgegenhaltungen:
- US-A1- 2008 081 893
- US-A1- 2018 079 862
- US-B2- 7 709 581

## Beschreibung

Die vorliegende Erfindung betrifft ein Verfahren zur Herstellung von Polysiloxan-Polycarbonat-Blockcokondensaten (im Folgenden auch SiCoPC genannt) unter Verwendung speziell terminierter Polysiloxane, Polysiloxan-Polycarbonat-Blockcokondensate mit mindestens einer Si-O-C-Bindung und feinen Siloxandomänen, eine Formmasse enthaltend das erfindungsgemäße Polysiloxan-Polycarbonat-Blockcokondensat, ein Formteil enthaltend das erfindungsgemäße Polysiloxan-Polycarbonat-Blockcokondensat, die Verwendung eines speziellen Bisphenols als Terminierungsgruppe eines Polysiloxans zur Erhöhung der Reaktivität des Polysiloxans und die Verwendung eines speziell terminierten Polysiloxans bei der Herstellung eines Polysiloxan-Polycarbonat-Blockcokondensats zur Erhöhung des Anteils an kovalenten Bindungen zwischen den Siloxanblöcken und den Polycarbonatblöcken.

Es ist bekannt, dass Polysiloxan-Polycarbonat-Blockcokondensate gute Eigenschaften bezüglich der Tieftemperaturschlagzähigkeit bzw. Tieftemperaturkerbschlagzähigkeit, der Chemikalienbeständigkeit und Außenbewitterungsbeständigkeit sowie der Alterungseigenschaften und Flammbeständigkeit aufweisen. Sie sind in diesen Eigenschaften z.T. den herkömmlichen Polycarbonaten (beispielsweise Homopolycarbonat auf Bisphenol-A Basis) überlegen.

Diese Cokondensate werden ausgehend von den Monomeren industriell zumeist über das Phasengrenzflächenverfahren mit Phosgen hergestellt. Ferner ist die Herstellung dieser Polysiloxan-Polycarbonat-Blockcokondensate über das Schmelzeumesterungsverfahren unter Einsatz von Diphenylcarbonat bekannt. Diese Verfahren haben den Nachteil, dass die dazu verwendeten industriellen Anlagen zur Herstellung von Standard-Polycarbonat verwendet werden und deshalb eine große Anlagengröße aufweisen. Die Herstellung spezieller Blockcokondensate ist auf diesen Anlagen wegen des geringeren Volumens dieser Produkte ökonomisch oft nicht sinnvoll. Ferner können die zur Herstellung der Cokondensate benötigten Einsatzstoffe, wie z.B. der Polydimethylsiloxane, die Anlage beeinträchtigen, da sie zu Verschmutzung der Anlage oder der Lösungsmittelkreisläufe führen können. Außerdem werden zur Herstellung schwer handhabbare Einsatzstoffe wie Phosgen benötigt oder erfordern wie im Schmelzeumesterungsverfahren einen hohen Energiebedarf.

Die Herstellung von Polysiloxan-Polycarbonat-Blockcokondensaten über das Phasengrenzflächenverfahren ist literaturbekannt und beispielsweise in US-PS 3 189 662, US-PS 3 419 634, DE-OS 3 34 782, US 2008/0081893A1 und EP 0 122 535 beschrieben.

Die Herstellung von Polysiloxan-Polycarbonat-Blockcokondensaten nach dem Schmelzumesterungsverfahren aus Bisphenol, Diarylcarbonat, silanolendterminierten Polysiloxanen und Katalysator, ist in der US 5 227 449 beschrieben. Als Siloxanverbindungen werden dabei Polydiphenyl- bzw. Polydimethylsiloxan-Telomere mit Silanolendgruppen verwendet. Bekannt ist jedoch, dass derartige Dimethylsiloxane mit Silanolendgruppen im sauren oder basischen Medium mit abnehmender Kettenlänge, im Gegensatz zu Diphenylsiloxan mit Silanolendgruppen, zunehmend zur Selbstkondensation neigen, so dass ein Einbau in das entstehende Copolymer dadurch erschwert ist. Dabei gebildete cyclische Siloxane verbleiben im Polymer und wirken außerordentlich störend bei Anwendungen im Elektrik-/Elektronikbereich.

In der US 5 504 177 wird die Herstellung eines Polysiloxan-Polycarbonat-Blockcokondensat über die Schmelzumesterung aus einem carbonatterminierten Silikon mit Bisphenol und Diarylcarbonat beschrieben. Aufgrund der großen Unverträglichkeit der Siloxane mit Bisphenol und Diarylcarbonat ist ein gleichmässiger Einbau der Siloxane in die Polycarbonat-Matrix über dem Schmelzumesterungsprozess nicht oder nur sehr schwer zu erreichen.

Nachteilig bei allen diesen Verfahren ist die Verwendung von organischen Lösungsmitteln in mindestens einem Schritt der Synthese der Polysiloxan-Polycarbonat-Blockcokondensate oder die Verwendung von Phosgen als Einsatzstoff oder die ungenügende Qualität des Cokondensats. Insbesondere ist die Synthese der Cokondensate ausgehend von den Monomeren sowohl im Phasengrenzflächenverfahren wie auch vor allem im Schmelzeumesterungsverfahren sehr aufwändig. So müssen z.B. bei Schmelzeverfahren ein geringes Vakuum und geringe Temperaturen angewendet werden, um ein Verdampfen und damit Entfernen der Monomere zu verhindern. Erst in späteren Reaktionsstufen, in denen sich Oligomere mit höherer Molmasse gebildet haben, können niedrigere Drücke und höhere Temperaturen angewendet werden. Dies bedeutet, dass die Reaktion über mehrere Stufen geführt werden muss und die Reaktionszeiten damit entsprechend lang sind.

Um die oben beschriebenen Nachteile zu vermeiden, sind auch Reaktivextrusionsverfahren zur Herstellung Siloxan-basierter Blockcopolycarbonate beschrieben worden. Dies ist z.B. in US 5414054 und US 5821321 publiziert worden. Hier wird ein herkömmliches Polycarbonat mit einem speziellen Polydimethylsiloxan in einem Reaktivextrusionsverfahren umgesetzt. Nachteilig an diesem Verfahren ist allerdings der Einsatz spezieller Silikonkomponenten, welche hochpreisig sind. Ferner werden bei diesem Verfahren hochwirksame Umesterungskatalysatoren eingesetzt, welche die Herstellung der Cokondensate innerhalb kurzer Verweilzeiten auf einem Extruder ermöglichen. Diese Umesterungskatalysatoren verbleiben allerdings im Produkt und können nicht oder nur ungenügend inaktiviert werden. Deshalb weisen Spritzgusskörper aus den so hergestellten Cokondensaten ein ungenügendes Alterungsverhalten, insbesondere ein ungenügendes Thermoalterungsverhalten auf. Damit ist das resultierende Blockcopolycarbonat nicht für hochqualitative Anwendungen geeignet. Dieses Produkt weist im Vergleich zu einem Blockcopolycarbonat aus dem Phasengrenzflächenverfahren nicht die entsprechenden Eigenschaften, wie Alterungsverhalten und mechanische Eigenschaften auf.

Siloxanblöcke nach dem Stand der Technik weisen häufig Si-C-Bindungen auf. Im Sinne der vorliegenden Erfindung beziehen sich die Begriffe "Si-C-Bindung" und/oder "Si-O-C-Bindung" bevorzugt auf Polysiloxane, welche eine Terminierung aufweisen. Diese Terminierung ist bevorzugt ein organischer Rest mit phenolischer OH-Gruppe. Dabei ist dieser organische Rest mit phenolischer OH-Gruppe bevorzugt über eine Si-C-Bindung bzw. eine Si-O-C-Bindung angebunden. Es kann auch sein, dass eine Si-C-Bindung und/oder eine Si-O-C-Bindung an einer anderen Stelle im Polysiloxan vorhanden ist. Jedoch ist es bevorzugt, dass es sich hierbei zumindest um die Verknüpfung der Endgruppe (Terminierungsgruppe) mit der Siloxangruppe handelt.

Die Si-C-Bindungen sind deutlich hydrolysestabiler als Si-O-C-Bindungen. Allerdings müssen die Si-C-Bindungen enthaltenden Polysiloxanblöcke aufwändig über Hydrosylilierung mittels Pd oder Pt Katalyse hergestellt werden. Solche Katalysatoren sind hochpreisig. Typische Polydimethylsiloxane mit Si-C-Bindungen sind in Formel (I) bis (III) dargestellt: 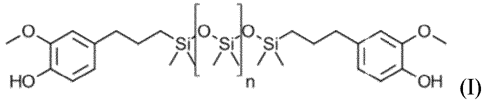 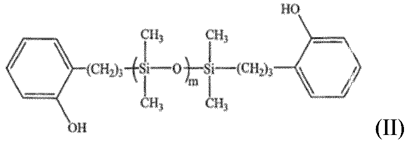 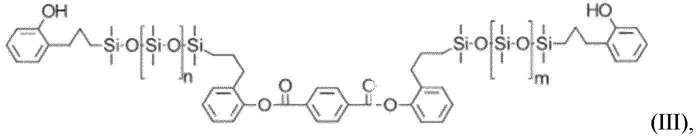 wobei n bzw. m in den Formeln (I) bis (III) jeweils die durchschnittliche Anzahl an Wiederholungseinheiten angibt.

Polysiloxane mit Si-O-C-Bindungen dagegen sind deutlich leichter ohne den Einsatz von teurer Pd oder Pt Katalysatoren zugänglich. Beispielsweise sind Hydrochinon oder BPAterminierte Siloxane bekannt, die über eine Si-O-C Verknüpfung verfügen (siehe beispielsweise WO 2013 155046A1).

Allerdings zeigte sich, dass BPA oder Hydrochinon-terminierte Polysiloxane nicht vollständig homogen in das Blockcokondensat eingebaut werden. Mit dem Begriff "nicht homogener Einbau" ist erfindungsgemäß bevorzugt gemeint, dass der Siloxananteil der in Aceton löslichen Polymerfraktion nur noch geringe Polycarbonat oder Oligocarbonatanteile aufweist. Diese hoch Polysiloxan-reiche Phase kann die Polymermorphologie dahingehend verschlechtern, dass große Phasen an Polysiloxan-reichen Bereichen gebildet werden. Ohne an eine Theorie gebunden sein zu wollen, ist davon auszugehen, dass die Bildung solcher großen Siloxandomänen teilweise auch durch die hohen Tendenz von Polysiloxanen mit Si-O-C-Bindungen und/oder Si-C-Bindungen zur Selbstkondensation zu begründen ist. Unter dem Begriff "Selbstkondensation" ist erfindungsgemäß bevorzugt die Reaktion eines Polysiloxanblocks mit einem weiteren Polysiloxanblock zu verstehen. Im Gegensatz zu Polysiloxanen mit Si-C-Verknüpfungen scheinen Polysiloxane mit Si-O-C-Verknüpfungen aber auch eine Tendenz zur Selbstkondensation zu zeigen, selbst wenn keine Carbonatspender wie Phosgen oder ein Diarylcarbonat wie Diphenylcarbonat an der Reaktion beteiligt sind. Daher scheint die Vermeidung der Selbstkondensation insbesondere bei Polysiloxanen mit Si-O-C-Bindungen eine große Herausforderung zu sein.

Eine hohe Siloxandomänengröße wirkt sich negativ auf die Verarbeitungseigenschaften des SiCoPCs aus. Durch große Domänen kann es zu Entmischungen kommen, welche sich durch inhomogene Oberflächenstruktur äußern können und z.T. zu Fließlinien und Streifenbildung führt. Da große Domänen scherempfindlich sind, lassen sich derartige Materialien auch schwer im Spritzguss verarbeiten, so dass nur sehr kleine Verarbeitungsfenster möglich sind. So muss zum Teil bei sehr niedrigen Einspritzgeschwindigkeiten gearbeitet werden, was häufig unerwünscht ist, da es die Zykluszeit herabsetzt.

Insbesondere bei Herstellung der Blockcokondensate in der Schmelze werden im Stand der Technik große Siloxandomänen gebildet.

Die Siloxandomänengröße eines SiCoPCs liegt im Phasengrenzflächenprozess bei Einsatz Si-C angebundener Siloxanblöcke typischerweise unterhalb von 100 nm. Dadurch lassen sich transluzente bzw. sogar transparente Materialien erhalten, da es durch die geringe Domänengröße kaum noch zu einer Lichtstreuung kommt.

Die Herstellung von Siloxan-haltigen Blockcokondensaten ausgehend von Si-C angebundenen Polydimethylsiloxanblöcken mit niedrigem Trübungsgrad ist prinzipiell bekannt. In WO 2004016674 A1 wird ein Vorkondensat im Phasengrenzflächenverfahren aus einem Oligocarbonat und Siloxan hergestellt und dann in einem zweiten Schritt mit einem Bisphenol im Phasengrenzflächenverfahren weiter aufkondensiert.

Das Schmelzeumesterungsverfahren hat den Nachteil, dass man prinzipiell nicht verdünnt arbeiten kann und die Reaktionspartner immer sehr konzentriert vorliegen. Dabei kommt es erfahrungsgemäß zur Ausbildung von Siloxandomänen in der Größe zwischen 0,1 und 10 µm. SiCoPCs auf Basis von Dihydroxydiphenylcycloalkanen der Formel (1) sind prinzipiell bekannt. Beispielsweise sind in DE3926850 derartige Strukturen beschrieben. Dabei geht es jedoch um Blockcokondensate, die aus Dihydroxydiphenylcycloalkanen aufgebaut sind, d.h. die Polymere enthalten das spezielle Bisphenol in der Polymerkette. Dadurch werden die Eigenschaften des resultierenden SiCoPCs jedoch beeinflusst (insbesondere die Glasübergangstemperatur). Dies ist aus unterschiedlichsten Gründen nicht immer wünschenswert.

Die EP 3 036 279 A1 beschreibt ebenfalls Polysiloxane, die unterschiedlich terminiert sein können. Dabei ist eine Terminierung mit Dihydroxydiphenylcycloalkanen beschrieben - diese sind aber nicht bevorzugt. Die Anmeldung macht keine Angaben zum Einbauverhalten derartiger Siloxanblöcke in Polycarbonat.

Die WO2016162301A1 beschreibt ein Verfahren zur Herstellung von Siloxanhaltigen Blockcokondensaten die Dihydroxydiphenylcycloalkane enthalten. Die entsprechenden Blockcokondensate werden im Schmelzeumesterungsverfahren hergestellt. Allerdings sind auch hier die Dihydroxydiphenylcycloalkane in der Polycarbonatteilstruktur und in der Siloxanteilstruktur enthalten.

Das Dokument US 2018/079862 A1 verwendet ein Bisphenol gemäß vorliegender Formel (3), um Polysiloxan-Carbonat-Copolymere herzustellen. Es gibt jedoch keine Bildung einer direkten SiOC-Bindung zwischen dem Siloxan und dem Bisphenol (3).

Ausgehend vom Stand der Technik bestand daher die Aufgabe darin, mindestens einen Nachteil, bevorzugt alle Nachteile aus dem Stand der Technik zu überkommen. Insbesondere bestand die Aufgabe der vorliegenden Erfindung darin, die Selbstkondensation von Polysiloxanen, enthaltend mindestens eine Si-O-C-Bindung bei der Herstellung eines SiCoPCs zu minimieren. Statt dessen soll die Reaktion vom Polysiloxan mit dem Bisphenol bzw. dem Oligocarbonat bzw. dem Polycarbonat bevorzugt stattfinden. Dabei sollten Polysiloxane, enthaltend mindestens eine Si-O-C-Bindung, verwendet werden, um die aufwändige und teure Hydrosilylierung mittels Pd oder Pt Katalyse zu vermeiden. Insbesondere lag der vorliegenden Erfindung die Aufgabe zu Grunde, ein Polysiloxan-Polycarbonat-Blockcokondensat bereitzustellen, welches keinen signifikanten Polysiloxan-reichen Anteil (mit nur noch geringem PC Anteil) aufweist und sich durch eine besonders feine Siloxandomänenverteilung auszeichnet. Weist das SiCoPC einen signifikanten Polysiloxan-reichen Anteil auf, kommt es zu den oben beschriebenen Effekten. Bevorzugt sollte das Polysiloxan-Polycarbonat-Blockcokondensat des Weiteren im Schmelzeumesterungsprozess hergestellt werden. Insbesondere bestand die Aufgabe der vorliegenden Erfindung darin, ein Polysiloxan-Polycarbonat-Blockcokondensat bereitzustellen, bei dem mindestens 50 Vol.-%, besonders bevorzugt mindestens 75 Vol.-% und ganz besonders bevorzugt mindestens 90 Vol.-% aller Siloxandomänen der Siloxandomänenverteilung des Polysiloxan-Polycarbonat-Blockcokondensats in einem Bereich von größer 0 bis 50 nm liegen.

Mindestens eine der genannten Aufgaben, bevorzugt alle der genannten Aufgaben wurde durch die vorliegende Erfindung gelöst.

Es konnte überraschend gezeigt werden, dass Polysiloxanblöcke, welche Si-O-C Bindungen aufweisen und welche mit cycloaliphatisch-substituierten bzw. cycloaliphat-haltigen Bisphenolen terminiert sind, einen deutlich homogeneren Einbau in das SiCoPC zeigen. Ferner weisen sie eine feinere Phasenmorphologie auf. Dies weist darauf hin, dass die Selbstkondensation des Polysiloxans durch die spezielle Terminierung verlangsamt bzw. unterdrückt bzw. minimiert werden konnte. Die Reaktivität des speziell terminierten Polysiloxans gegenüber den Verbindungen, welche die Struktur der Formel (2) umfassen, scheint demgemäß größer zu sein als gegenüber weiteren speziell terminierten Polysiloxanen. Dies war überraschend, da sich die cycloaliphatischen Bisphenole nur unwesentlich von den Alkyl-haltigen Bisphenolen wie Isopropylidenbisphenol (BPA) unterscheiden. Durch die verbesserte Siloxan-Domänengröße wurden verbesserte Verarbeitungseigenschaften des SiCoPCs erhalten. Die Tendenz zur Entmischung wurde reduziert und das Verarbeitungsfenster für den Spritzguss der erfindungsgemäßen Polycarbonatzusammensetzungen wurde verbreitert.

Ohne an eine Theorie gebunden sein zu wollen, könnte der speziell terminierte Polysiloxanblock der vorliegenden Erfindung durch die cycloaliphatische Struktur über eine sterische Hinderung und/oder elektronische Stabilisierung verfügen, welche die Si-O-C-Bindung stabiler macht bzw. die Tendenz zur Selbstkondensation minimiert.

Erfindungsgemäß wird bevorzugt unter dem Ausdruck "homogenerer Einbau in das SiCoPC" verstanden, dass anteilig mehr Siloxanblöcke kovalent mit Polycarbonatblöcken kovalent verbunden sind, als wenn im Vergleich unter den gleichen Bedingungen ein BPA-terminerter (Bisphenol A-terminerter) Siloxanblock verwendet wird. Dabei weist der BPA-terminerte Siloxanblock bevorzugt die gleiche Struktur auf wie das gemäß der Erfindung eingesetzt Polysiloxan, mit dem Unterschied, dass die BPA-Strukturen erfindungsgemäß durch die definierten cycloaliphatischen Bisphenole ausgetauscht wurden.

Ebenso wird erfindungsgemäß der Ausdruck "feinere Siloxandomänen" oder "feinere Phasenmorphologie" bevorzugt so verstanden, dass die Siloxandomänen und/oder die Phasenmorphologie kleiner ist als wenn im Vergleich ein BPA-terminierter Siloxanblock bei ansonsten gleichen Bedingungen verwendet wird.

Erfindungsgemäß wird daher ein Verfahren zur Herstellung eines Polysiloxan-Polycarbonat-Blockcokondensats bereitgestellt, welches durch die Reaktion mindestens eines Polysiloxans der Formel (1) 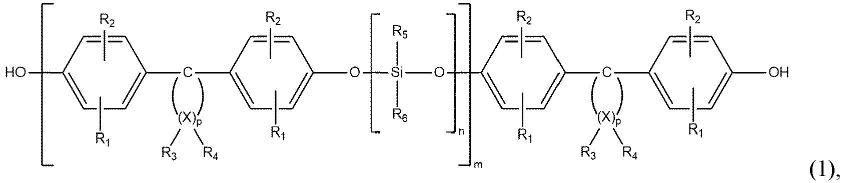
worin jedes R₁ und R₂ jeweils unabhängig voneinander für Wasserstoff, Halogen, C₁-C₈-Alkyl, C₅-C₆-Cycloalkyl, Phenyl oder C₇-C₁₂ Aralkyl steht, R₃ und R₄ für jedes X individuell wählbar sind und unabhängig voneinander für Wasserstoff oder C₁-C₆-Alkyl stehen, p eine ganze Zahl von 4 bis 7 ist und X Kohlenstoff bedeutet,
jedes R₅ und R₆ jeweils unabhängig voneinander für eine aliphatische oder eine aromatische Gruppe, bevorzugt für Methyl, Ethyl, Trimethylphenyl, - CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
n für eine durchschnittliche Anzahl von Wiederholungseinheiten von 10 bis 400, bevorzugt 10 bis 100, besonders bevorzugt 15 bis 50 steht und m für eine für eine durchschnittliche Anzahl von Wiederholungseinheiten von 1 bis 10, bevorzugt 1 bis 6, besonders bevorzugt 1,5 bis 5 steht,

(i) mit mindestens einer Verbindung der Formel (2) und/oder (2I) in Anwesenheit mindestens einer Base und Phosgen im Phasengrenzflächenverfahren,
(ii) mit mindestens einer Verbindung der Formel (2) und mindestens einem Diarylcarbonat im Schmelzeumesterungsverfahren oder
(iii) mit mindestens einer Verbindung der Formel (2II) und gegebenenfalls mindestens einem Diarylcarbonat im Schmelzeumesterungsverfahren,
   wobei 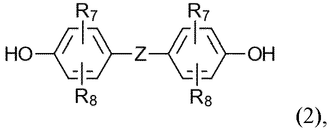 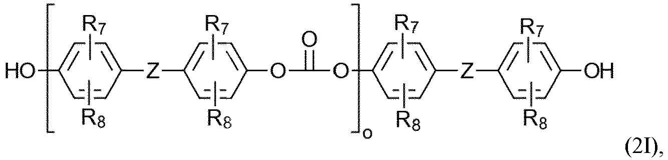 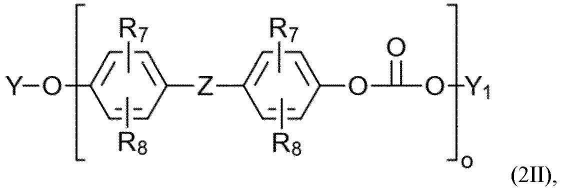
   worin jedes Z in der Formel (2), (2I) oder (2II) jeweils unabhängig voneinander für eine Einfachbindung, -S(=O)₂-, -C(=O)-, -O-, -S-, -S(=O)-, -CH(CN)-, eine lineare oder verzweigte C₁-C₆-Alkylengruppe, welche gegebenenfalls mindestens eine Carbonyl-Gruppe umfassen kann, gegebenenfalls mindestens ein Halogenatom aufweisen kann und/oder welche gegebenenfalls durch mindestens ein Heteroatom unterbrochen sein kann, C₂-C₁₀-Alkylidengruppe, welche gegebenenfalls mindestens eine Kohlenstoff-Kohlenstoff-Doppelbindung aufweisen kann, gegebenenfalls mindestes eine Carbonyl-Gruppe aufweisen kann und/oder gegebenenfalls mindestens ein Halogenatom aufweisen kann,
   jedes R₇ und R₈ in der Formel (2), (2I) oder (2II) jeweils unabhängig voneinander für Wasserstoff, Halogen, C₁-C₈-Alkyl, C₃-C₆-Cycloalkyl, C₁-C₄-Alkoxy, Phenyl oder C₇-C₁₂ Aralkyl steht,
   o in der Formel (2I) oder (2II) für die mittlere Anzahl von Wiederholungseinheiten steht und 2 bis 40, bevorzugt 7 bis 31 sein kann,
   Y in der Formel (2II) für Wasserstoff oder -(C=O)-O-Ph steht, wobei Ph für ein gegebenenfalls substituiertes Phenyl steht und
   Y₁ in der Formel (2II) für gegebenenfalls substituiertes Phenyl oder eine Verbindung der Formel (2IIa) steht, wobei 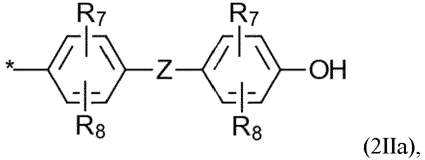
   worin jedes Z, R₇ und R₈ die für die Formel (2II) gegebenen Bedeutungen hat und "*" für die Stelle steht, an der die Struktur der Formel (2IIa) als Y₁ an Formel (2II) anknüpft.

Bevorzugt wird erfindungsgemäß ein Polysiloxan der Formel (1) eingesetzt, worin jedes R₁ und R₂ jeweils unabhängig voneinander für Wasserstoff oder C₁-C₈-Alkyl steht besonders bevorzugt für Wasserstoff, R₃ und R₄ für jedes X individuell wählbar sind und unabhängig voneinander für Wasserstoff oder C₁-C₃-Alkyl stehen, besonders bevorzugt für Wasserstoff oder Methyl stehen, p eine ganze Zahl von 4 bis 7, bevorzugt 4 bis 6, besonders bevorzugt 4 bis 5 ist und X Kohlenstoff bedeutet, jedes R₅ und R₆ jeweils unabhängig voneinander für Methyl, Ethyl, Trimethylphenyl, -CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl, bevorzugt für Methyl oder Phenyl steht, n für eine durchschnittliche Anzahl von Wiederholungseinheiten von 10 bis 400, bevorzugt 10 bis 100, besonders bevorzugt 15 bis 50 steht und m für eine für eine durchschnittliche Anzahl von Wiederholungseinheiten von 1 bis 10, bevorzugt 1 bis 6, besonders bevorzugt 1,5 bis 5 steht.

Für den Fachmann ist ersichtlich, dass Formel (1) oben auch durch Formel (100) dargestellt werden, kann 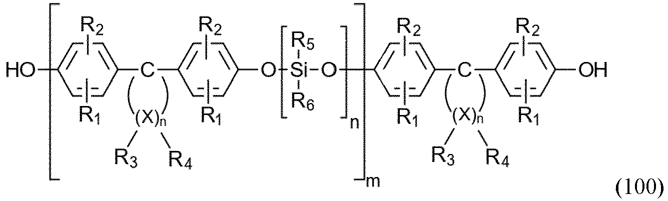
worin jedes R₁ und R₂ jeweils unabhängig voneinander für Wasserstoff, Halogen, C₁-C₈-Alkyl, C₅-C₆-Cycloalkyl, Phenyl oder C₇-C₁₂ Aralkyl steht,
R₃ und R₄ für jedes X individuell wählbar sind und unabhängig voneinander für Wasserstoff oder C₁-C₆-Alkyl stehen, n eine ganze Zahl von 4 bis 7 ist und
X Kohlenstoff bedeutet,
jedes R₅ und R₆ jeweils unabhängig voneinander für eine aliphatische oder eine aromatische Gruppe, bevorzugt für Methyl, Ethyl, Trimethylphenyl, -CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
n für eine durchschnittliche Anzahl von Wiederholungseinheiten von 10 bis 400 steht und
m für eine für eine durchschnittliche Anzahl von Wiederholungseinheiten von 1 bis 10 steht.

Besonders bevorzugt wird erfindungsgemäß ein Polysiloxan der Formel (1) eingesetzt, worin jedes R₁ und R₂ jeweils für Wasserstoff steht, R₃ und R₄ für jedes X individuell wählbar sind und unabhängig voneinander für Wasserstoff oder Methyl stehen, p eine ganze Zahl 4 oder 5 ist und X Kohlenstoff bedeutet, jedes R₅ und R₆ jeweils unabhängig voneinander für Methyl oder Phenyl steht, n für eine durchschnittliche Anzahl von Wiederholungseinheiten von 10 bis 400, bevorzugt 10 bis 100, besonders bevorzugt 15 bis 50 steht und m für eine für eine durchschnittliche Anzahl von Wiederholungseinheiten von 1 bis 10, bevorzugt 1 bis 6, besonders bevorzugt 1,5 bis 5 steht.

Ganz besonders bevorzugt wird ein Polysiloxan der Formel (1A) eingesetzt, wobei 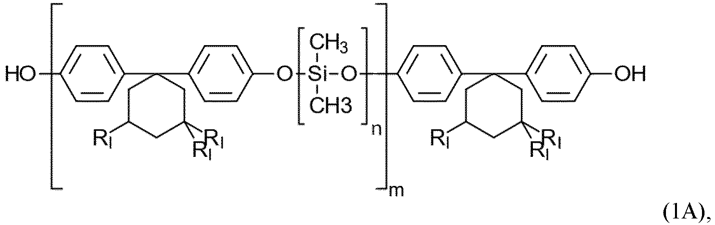 worin jedes R_{I} jeweils unabhängig voneinander für Wasserstoff oder Methyl steht, n für eine durchschnittliche Anzahl von Wiederholungseinheiten von 10 bis 400, bevorzugt 10 bis 100, besonders bevorzugt 15 bis 50 steht und m für eine für eine durchschnittliche Anzahl von Wiederholungseinheiten von 1 bis 10, bevorzugt 1 bis 6, besonders bevorzugt 1,5 bis 5 steht. Besonders bevorzugt steht jedes R_{I} in Formel (1A) für Methyl.

Im Rahmen der vorliegenden Erfindung wird häufig von einer "Terminierung" des Polysiloxans der Formel (1) gesprochen. Unter einer Terminierung wird bevorzugt verstanden, dass alle Enden des Polysiloxans (in der Regel 2) eine spezielle organische Gruppe aufweisen (siehe dazu z. B. Formel (1)).

Die speziell terminierten Polysiloxane der Formel (1) können über verschiedene Verfahren hergestellt werden. Z. B. können die speziell terminierten Polysiloxane durch Umsetzung von Bisacetoxyacyloxy-terminierten Siloxanblöcken mit den entsprechenden Dihydroxydiphenylcycloalkanen erhalten werden. Die Herstellung von Acyloxy-terminierten Siloxanen ist z.B. in EP0003285 und in US4584360 beschrieben. Ferner können die speziell terminierten Polysiloxane über alpha,omega-Dichlorpolydimethylsiloxane hergestellt werden. Dies ist z.B. in US3821325 beschrieben. Dabei wird beispielsweise die Dichlorsiloxanverbindung mit dem entsprechenden cycloaliphatischen-Bisphenol in einem inerten Lösungsmitteln bei Temperaturen zwischen 0 und 100 °C in Anwesenheit eines Säureakzeptors umgesetzt.

Das Molekulargewicht (Mw) des Polysiloxans beträgt bevorzugt 2.000 bis 20.000 g/mol und insbesondere bevorzugt 2500 - 15.000 g/mol. Das Molekulargewicht wird bevorzugt, wie weiter unten definiert, bestimmt.

Das Polysiloxan der Formel (1) wird bevorzugt in einem Verhältnis von 0,5 bis 50 Gew.-%, bevorzugt von 1 bis 40 Gew.-%, insbesondere bevorzugt von 2 bis 20 Gew.-% und ganz besonders bevorzugt von 2,5 bis 10 Gew.-% bezogen auf die Summe der Gewichte des Polysiloxans der Formel (1) und der Verbindung, umfassend die Struktur der Formel (2), (2I) und/oder (2II) (je nachdem, welche dieser Verbindungen verwendet werden) eingesetzt.

Erfindungsgemäß reagiert das Polysiloxan der Formel (1)
(i) mit mindestens einer Verbindung der Formel (2) und/oder (2I) in Anwesenheit mindestens einer Base und Phosgen im Phasengrenzflächenverfahren,
(ii) mit mindestens einer Verbindung der Formel (2) und mindestens einem Diarylcarbonat im Schmelzeumesterungsverfahren oder
(iii) mit mindestens einer Verbindung der Formel (2II) und gegebenenfalls mindestens einem Diarylcarbonat im Schmelzeumesterungsverfahren.

Dabei ist es bevorzugt, dass jedes Z in der Formel (2), (2I) oder (2II) jeweils unabhängig voneinander für eine Einfachbindung, -S(=O)₂-, -C(=O)-, -O-, -S-, -S(=O)-, -CH(CN)-, eine lineare oder verzweigte C₁-C₆-Alkylengruppe oder eine C₂-C₁₀-Alkylidengruppe steht und jedes R₇ und R₈ in der Formel (2), (2I) oder (2II) jeweils unabhängig voneinander für Wasserstoff, C₁-C₈-Alkyl oder C₁-C₄-Alkoxy steht.

Insbesondere ist es bevorzugt, dass jedes Z in der Formel (2), (2I) oder (2II) jeweils unabhängig voneinander für eine Einfachbindung oder eine C₂-C₆-Alkylidengruppe steht und jedes R₇ und R₈ in der Formel (2), (2I) oder (2II) jeweils unabhängig voneinander für Wasserstoff, C₁-C₃-Alkyl oder C₁-C₂-Alkoxy steht.

Ganz besonders ist es bevorzugt, dass jedes Z in der Formel (2), (2I) oder (2II) jeweils unabhängig voneinander für eine Einfachbindung oder Isopropyliden steht und jedes R₇ und R₈ in der Formel (2), (2I) oder (2II) jeweils unabhängig voneinander für Wasserstoff oder Methoxy, bevorzugt Wasserstoff steht.

Erfindungsgemäß wird das Polysiloxan der Formel (1) mit mindestens einer Verbindung der Formel (2), (2I) oder (2II) umgesetzt. Dabei ist auch denkbar, dass mindestens zwei Verbindungen der Formel (2), (2I) oder (2II) mit dem Polysiloxan der Formel (1) umgesetzt werden. Dabei ist es insbesondere bevorzugt, dass bei der ersten Verbindung der Formel (2), (2I) oder (2II) Z jeweils für Isopropyliden steht und R₇ und R₈ jeweils für Wasserstoff stehen. Ebenso ist es bevorzugt, dass bei der zweiten Verbindung der Formel (2), (2I) oder (2II) Z jeweils für eine Einfachbindung steht und R₇ und R₈ jeweils für Wasserstoff stehen.

Insbesondere ist es bevorzugt, dass Z in Formel (2), (2I) oder (2II) für Isopropyliden steht. Dementsprechend ist die Formel (2), (2I) oder (2II) von Bisphenol A abgeleitet.

Die angegebenen Zahlen von o stellen dabei die mittlere Anzahl an Wiederholungseinheiten dar. Der Begriff "mittlere Anzahl an Wiederholungseinheiten" ist dem Fachmann bekannt. Der Fachmann weiß, wie dieser Parameter zu bestimmen ist. Insbesondere kann dieser Parameter mittels GPC bestimmt werden. Bevorzugt wird er bestimmt über die GPC-Methode, wie sie im Kontext der vorliegenden Erfindung beschreiben wird.

Im Kontext der vorliegenden Erfindung bezieht sich der Begriff "Alkyl" bzw. "Alkylgruppe" bevorzugt und soweit nicht anders angegeben auf eine Alkanstruktur, von der ein Waserstoffatom entfernt wurde. Die Alkylgruppe gemäß der vorliegenden Erfindung kann linear oder verzweigt sein. Sie ist gesättigt und umfasst daher nur Einfachbindungen zwischen den benachbarten Kohlenstoffatomen. Bevorzugt umfasst die Alkylgruppe Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl und dergleichen. Die Auswahl dieser Strukturen kann begrenzt sein, wenn im Rahmen der vorliegenden Erfindung die Anzahl der Kohlenstoffatome anders definiert wird.

Im Kontext der vorliegenden Erfindung bezieht sich der Begriff "Alkylen" bzw. "Alkylengruppe" bevorzugt und soweit nicht anders angegeben auf eine verbrückende Alkanstruktur, von der zwei Wasserstoffatome von unterschiedlichen Kohlenstoffatomen entfernt wurden. In diesem Kontext können die zwei Wasserstoffatome, die von den zwei Kohlenstoffatomen entfernt wurden, von beliebigen Kohlenstoffatomen in der Alkanstruktur enfernt werden. Dies bedeutet, dass die beiden Kohlenstoffatome benachbart sein können, aber nicht zwingend benachbart sein müssen. Eine Alkylengruppe kann linear oder verzweigt sein. Sie ist gesättigt. Wenn die Alkylengruppe nur ein Kohlenstoffatom umfasst, handelt es sich um eine Methylengruppe (-CH₂-), welche mit dem Rest des Moleküls über zwei Einfachbindungen verbunden ist. Bevorzugt umfasst die Alkylengruppe Methylen, Ethylen, n-Propylen, iso-Propylen, n-Butylen, sec-Butylen, tert-Butylen, n-Pentylen, 1-Methylbutylen, 2-Methylbutylen, 3-Methylbutylen, Neopentylen, 1-Ethylpropylen, n-Hexylen, 1,1-Dimethylpropylen, 1,2-Dimethylpropylen, 1,2-Dimethylpropylen, 1-Methylpentylen, 2-Methylpentylen, 3-Methylpentyln, 4-Methylpentylen, 1,1-Dimethylbutylen, 1,2-Dimethylbutylen, 1,3-Dimethylbutylen, 2,2-Dimethylbutylen, 2,3-Dimethylbutylen, 3,3-Dimethylbutylen, 1-Ethylbutylen, 2-Ethylbutylen, 1,1,2-Trimethylpropylen, 1,2,2-Trimethylpropylen, 1-Ethyl-1-methylpropylen, 1-Ethyl-2-methylpropylen, 1-Ethyl-2-methylpropylen und dergleichen. Die Auswahl dieser Strukturen kann begrenzt sein, wenn im Rahmen der vorliegenden Erfindung die Anzahl der Kohlenstoffatome anders definiert wird. Zudem kann die Alkylengruppe gemäß der vorliegenden Erfindung gegebenenfalls mindestens eine Carbonylgruppe aufweisen, gegebenenfalls mindestens ein Halogenatom aufweisen und/oder gegebenenfalls durch mindestens ein Heteroatom unterbrochen sein. Beispiele für solche Alkylengruppen sind -C(=O)-(CH₂)₄-C(=O)-, -C(=O)-(CH₂)₃-C(=O)-, - C(=O)-(CH₂)₂-C(=O)-, -C(CF₃)₂, -O-(CH₂)₄-O-, -O-(CH₂)₃-O-, -O-(CH₂)₂-O- und dergleichen.

Im Kontext der vorliegenden Erfindung bezieht sich der Begriff "Alkyliden" bzw. "Alkylidengruppe" bevorzugt und soweit nicht anders angegeben auf eine verbrückende Alkanstruktur, bei der zwei Wasserstoffatome von demselben Kohlenstoffatom entfernt wurden. Die Alkylidengruppe umfasst gegebenenfalls mindestens eine Kohlenstoff-Kohlenstoff-Doppelbindung, gegebenenfalls mindestes eine Carbonyl-Gruppe und/oder gegebenenfalls mindestens ein Halogenatom. Bevorzugt umfasst die Alkylidengruppe isoPropyliden, n-Propyliden, iso-Heptyliden und dergleichen.

Im Kontext der vorliegenden Erfindung bezieht sich der Begriff "Aralkyl" bevorzugt und soweit nicht anders angegeben in jedem Fall unabhängig voneinander auf eine lineare, cyclische oder verzweigte Alkylgruppe, welche einfach, zweifach oder mehrfach mit Arylresten substitutiert ist.

Im Kontext der vorliegenden Erfindung bezieht sich der Begriff "Alkoxy" bzw. "Alkoxygruppe" bevorzugt und soweit nicht anders angegeben auf eine lineare, cyclische oder verzweigte Alkylgruppe, welche einfach an ein Sauerstoffatom gebunden (-OR). Bevorzugt weisen Alkoxygruppen gemäß der vorliegenden Erfindung 1 bis 6 Kohlenstoffatome auf. Besonders bevorzugt umfassen Alkoxygruppen Methoxy, Ethoxy, n-Propoxy, iso-Propoxy, *n-*Nutoxy, sec-Butoxy, tert-Butoxy, n-Pentoxy, 1-Methylbutoxy, 2-Methylbutoxy, 3-Methylbutoxy, neo-Pentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy. Die Auswahl dieser Strukturen kann begrenzt sein, wenn im Rahmen der vorliegenden Erfindung die Anzahl der Kohlenstoffatome anders definiert wird.

Basierend auf den oben genannten Definitionen ist der Fachmann in der Lage, weitere Definitionen, welche nicht explizit oben genannt sind, zu verstehen.

Die Reaktion des Polysiloxans gemäß (i) mit mindestens einer Verbindung der Formel (2) und/oder (2I) erfolgt erfindungsgemäß im Phasengrenzflächenverfahren. Dem Fachmann sind diese Verfahren und ihre speziellen Verfahrensweisen bekannt. Dabei erfolgt das Verfahren im Phasengrenzflächenverfahren mit Phosgen und in Anwesenheit einer Base. Auch die Verwendung mindestens einer Base im Phasengrenzflächenverfahren ist dem Fachmann bekannt. Insbesondere handelt es sich dabei um eine wässrige Alkali- oder Erdalkalimetallhydroxidlösung. Ganz besonders bevorzugt handelt es sich bei der mindestens einen Base um eine wässrige Natriumhydroxidlösung.

Das Phasengrenzflächenverfahren ist beispielsweise beschrieben in H. Schnell, Chemistry and Physics of Polycarbonates, Polymer Reviews, Vol. 9, Interscience Publishers, New York 1964 page 33 et seq., and on Polymer Reviews, Vol. 10, "Condensation Polymers by Interfacial and Solution Methods", Paul W. Morgan, Interscience Publishers, New York 1965, chapter VIII, page 325, und die angewendeten Reaktionsbedingungen sind dem Fachmann bekannt. Des Weiteren wird beispielsweise auch in EP-A 0517044 das Phasengrenzflächenverfahren zur Herstellung von Polycarbonat beschrieben.

Beim Phasengrenzflächenverfahren erfolgt in der Regel die Phosgenierung eines in wässrigeralkalischer Lösung oder Suspension vorgelegten Di-Natriumsalzes eines Diols/Bisphenols oder eines Gemisches verschiedener Diole/Bisphenole in Gegenwart eines organischen Lösungsmittels oder Lösungsmittelgemisches. Dieses ist in der Regel inert und bildet neben der wässrigen eine zweite organische Phase aus. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert, wobei das Molekulargewicht durch geeignete Kettenabbrecher (z. B. monofunktionelle Phenole) kontrolliert werden kann. Die organische Phase wird schließlich abgetrennt und das Polycarbonat durch verschiedene Aufbereitungsschritte daraus isoliert.

Die Aufkondensierung erfolgt gängigerweise in einem inerten Lösungsmittel in Gegenwart von Alkali und einem Katalysator in der Grenzfläche.

Insbesondere ist dem Fachmann bekannt, dass in der Regel nicht die OH-Endgruppen der Verbindungen der Formeln (1), (2) und/oder (2I) unmittelbar mit einander reagieren. Die Reaktion wird in Anwesenheit einer Base durchgeführt. Dadurch können sich Salze bilden. Zudem kann die Reaktion durch unterschiedliche Zugabezeitpunkte der Edukte auf eine für den Fachmann bekannte Weise beeinflusst werden. Insbesondere kann sowohl die Verbindung der Formel (2) und/oder (2I) zusammen mit dem Polysiloxan der Formel (1) phosgeniert werden, es kann eine getrennte Phosgenierung der Komponenten stattfinden oder es kann auch nur eine der Komponenten mit Phosgen reagieren. Hierbei kann auch mit unterschiedlichen Verdünnungen gearbeitet werden. Für den Fachmann ist ebenso ersichtlich, dass die Verbindung der Formel (2) je nach Reaktionsführung in die Verbindung der Formel (2I) überführen lässt. Eine vorteilhafte Verfahrensführung des Phasengrenzflächenverfahrens in Bezug auf die Vermeidung einer Selbstkondensation von Polysiloxanen (mit Si-C-Bindungen) ist in der US20040039145A beschrieben.

Alternativ erfolgt die Reaktion des Polysiloxans der Formel (1) gemäß (ii) oder (iii) im Schmelzeumesterungsverfahren. Auch dieses Verfahren und die Fahrweise ist dem Fachmann bekannt. Dabei erfolgt die Reaktion lösungsmittelfrei durch Kondensation in der Schmelze ausgehend von der Verbindung der Formel (2) mit mindestens einem Diarylcarbonat oder der Formel (2II) und gegebenenfalls mindestems einem Diarylcarbonat sowie dem speziell terminierten Polysiloxan. Das erfindungsgemäße Verfahren wird bevorzugt gemäß (ii) oder (iii) durchgeführt. Ganz besonders bevorzugt wird das erfindungsgemäße Verfahren gemäß (iii) durchgeführt. Dem Fachmann ist ersichtlich, dass es zwischen (ii) und (iii) einen gewissen Überlapp gibt. Insbesondere kann durch die Reaktion gemäß (ii) eine Verbindung der Formel (2II) entstehen, so dass (ii) auch in (iii) übergehen kann. Erfindungsgemäß scheint eine scharfe Abgrenzung zwischen (ii) und (iii) nicht erforderlich zu sein.

Das Schmelzeumesterungsverfahren ist beispielsweise beschrieben in Encyclopaedia of Polymer Science, Vol. 10 (1969), Chemistry and Physics of Polycarbonates, Polymer Reviews, H. Schnell, Vol, 9, John Wiley and Sons, Inc. (1964), und DE-C 10 31 512. Auch im Schmelzeumesterungsverfahren ist dem Fachmann bekannt, dass die Verbindungen der Formel (2) und/oder (2II) nicht unmittelbar reagieren müssen, sondern durch weitere Reaktionen ggf. andere Endgruppen aufweisen können. Besonders bevorzugt ist das erfindungsgemäße Verfahren dadurch gekennzeichnet, dass das Polysiloxan der Formel (1) (iii) mit mindestens einer Verbindung der Formel (2II) im Schmelzeumesterungsverfahren reagiert.

Bevorzugt handelt es sich bei dem Diarylcarbonat um eine Verbindung der Formel (III) 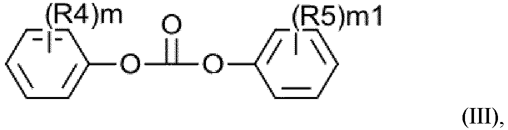 wobei
- R4 und R5: unabhängig voneinander für H, C₁-C₃₄-Alkyl, C₇-C₃₄-Aralkyl, C₆-C₃₄-Aryl oder -COO-R', wobei R' einem C₁-C₃₄-Alkyl, C₇-C₃₄-Aralkyl, C₆-C₃₄-Aryl entspricht, stehen und
- m und m1: unabhängig voneinander für eine Ganze Zahl von 1 bis 5 stehen, und sofern m eine Zahl von 2 bis 5 ist, jeder Rest R4 gleich oder verschieden sein kann, und sofern m1 eine Zahl von 2 bis 5 ist, jeder Rest R5 gleich oder verschieden sein kann.

Besonders bevorzugt handelt es sich bei dem Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 -phenylethyl)-phenyl-phenyl-carbonat und Di-[4-(1 -methyl-1 -phenylethyl)-phenyl]-carbonat, ganz besonders bevorzugt um Diphenylcarbonat.

Wird das erfindungsgemäße Verfahren im Schmelzeumesterungsverfahren durchgeführt, ist es weiterhin bevorzugt, dass das erfindungsgemäße Verfahren auf einem Extruder, Hochviskosreaktoren oder Dünnschichtverdampfern durchgeführt wird.

Bei dem Extruder oder Schmelzereaktor kann es sich um einen Einwellenreaktor, um einen Doppelwellenreaktor, oder einen Mehrwellenreaktor, beispielsweise einen Planetwalzenextruder oder Ringextruder handeln. Ferner kann es sich um einen Knetreaktor mit hohem Volumen handeln. Das Verfahren kann auf einem einzigen Gerät - z.B. einem Doppelwellenextruder als auch zweistufig, d.h. einer Reaktorkombination ausgeführt werden. Die Reaktorkombination besteht bevorzugt aus einem Vorreaktor - wie einem Doppelwellenextruder - und einem Hochviskosreaktor. Vorteilhafte Verfahrensführungen sind insbesondere in EP21187927 und EP21187920 beschrieben.

Des Weiteren ist es bevorzugt, dass die Verbindung, umfassend die Struktur der Formel (2I), eine relative Lösungsviskosität eta rel von 1,08 bis 1,22, bevorzugt 1,11 bis 1,22 und besonders bevorzugt 1,13 bis 1,20 aufweist. Die relative Lösungsviskosität (ηrel; auch als eta rel bezeichnet) wird bevorzugt in Dichlormethan bei einer Konzentration von 5 g/l bei 25 °C mit einem Ubbelohdeviskosimeter bestimmt. Dem Fachmann ist die Bestimmung der relativen Lösungsviskosität mittels Ubbelohdeviskosimeter bekannt. Erfindungsgemäß wird diese bevorzugt gemäß DIN 51562-3; 1985-05 durchgeführt. Dabei werden die Durchlaufzeiten des zu vermessenden Verbindung durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Probe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

Bei der Verbindung, umfassend die Struktur der Formel (2I) handelt es sich bevorzugt um ein Polycarbonat. Polycarbonate im Sinne der vorliegenden Erfindung sind sowohl Homopolycarbonate als auch Copolycarbonate sowie Mischungen von Polycarbonaten. Die Polycarbonate können in bekannter Weise linear oder verzweigt sein. Die Herstellung der Polycarbonate kann in bekannter Weise nach dem Schmelzeumesterungsverfahren oder dem Phasengrenzflächenverfahren erfolgen.

Vorzugsweise weisen solche Polycarbonate Molekulargewichte (Mw) von 8.000 bis 19.000 g/mol, besonders bevorzugt von 10.000 bis 18.000 g/mol und insbesondere bevorzugt von 12.000 bis 18.000 g/mol auf. Vorzugweise weisen diese Polycarbonate des Weiteren einen Gehalt an phenolischen OH-Gruppen von 250 ppm bis 2500 ppm, bevorzugt 500 bis 2000, und insbesondere bevorzugt von 1000 bis 1800 ppm auf. Die phenolischen OH-Gruppen werden bevorzugt mittels IR-Spektroskopie bestimmt.

Die für die Bestimmung der für das Polycarbonat, das Polysiloxan oder das Polysiloxan-Polycarbonat-Blockcokondensat im Rahmen der Erfindung angegebenen Molmassen verwendete Methode ist die Methode Nr. 2301-0257502-09D der Currenta GmbH & Co. OHG (von 2009), die jederzeit bei der Currenta angefragt werden kann. Die Kalibrierung erfolgt mit linearen Polycarbonaten (aus Bisphenol A und Phosgen) bekannter Molmassenverteilung der PSS Polymer Standards Service GmbH, Deutschland. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulen¬materials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors, UV-Detektors oder IR-Detektors, bevorzugt einem Brechungsindex-Detektor. Besonders bevorzugt erfolgt die Detektion mit Hilfe eines RI-Detektors oder eines UV-Detektors jeweils mit einem IR-Detektor. Der RI- und der UV-Detektor ist dabei insbesondere sensitiv für Polycarbonat-enthaltende Polymerketten (insbesondere BPA-Polycarbonat-enthaltende Polymerketten). Um auch die Polysiloxan-enthaltenen Polymerketten (insbesondere die Polydimethylsiloxanenthaltenden Polymerketten) erkennen zu können, wird bevorzugt der IR-Detektor auf die Si-O Schwingungsbande eingestellt . Diese liegt bei ca. 1050 cm⁻¹. Bevorzugt ist die gleichzeitige Verwendung von UV-, RI und IR-Detektor.

Kommt das Schmelzeumesterunsgverfahren zur Herstellung des SiCoPCs zum Einsatz werden in einer bevorzugten Ausführungsform Polycarbonate eingesetzt, welche bestimmte Umlagerungsstrukturen enthalten. Die in dieser Ausführungsform einzusetzenden Polycarbonate enthalten mindestens eine, bevorzugt mehrere der folgenden Strukturen (4) bis (7): 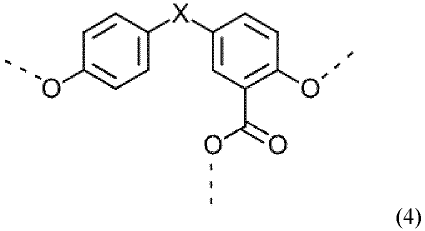 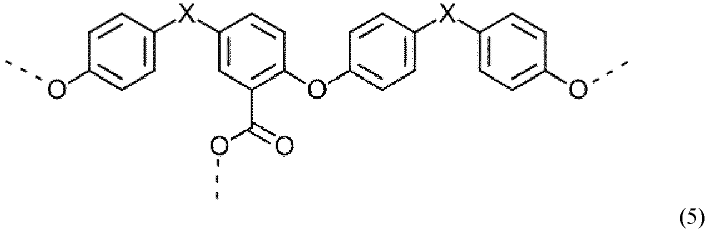 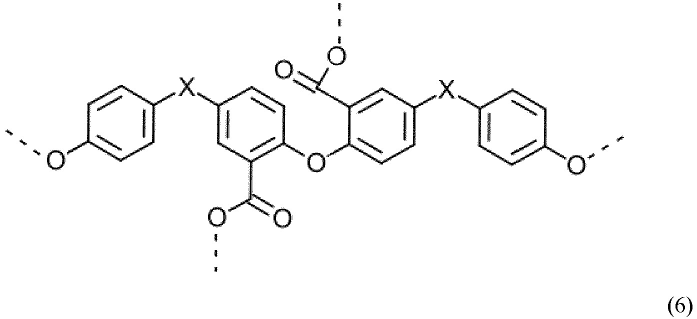 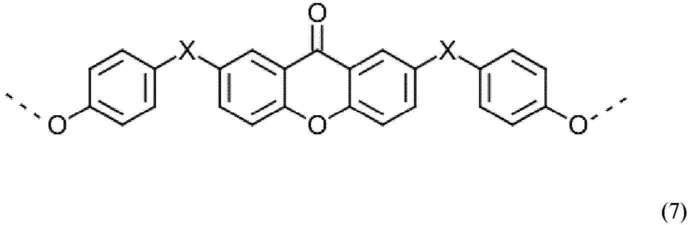 in denen die Phenylringe unabhängig voneinander ein- oder zweifach mit C1 - C8 Alkyl, Halogen, bevorzugt C1 bis C4 Alkyl, besonders bevorzugt mit Methyl substituiert sein können und X für eine Einfachbindung, C1 bis C6 Alkylen, C2 bis C5 Alkyliden oder C5 bis C6 Cycloalkyliden, bevorzugt für eine Einfachbindung oder C1 bis C4 Alkylen und insbesondere bevorzugt für Isopropyliden stehen, wobei die Menge der Struktureinheiten (4) bis (7) in Summe (bestimmt nach Verseifung) im Allgemeinen im Bereich von 50 bis 1000 ppm, bevorzugt im Bereich von 80 bis 850 ppm beträgt.

Um die Menge der Umlagerungsstrukturen zu bestimmen, wird das jeweilige Polycarbonat einer Totalverseifung unterzogen und so die entsprechenden Abbauprodukte der Formeln (4a) bis (7a) gebildet, deren Menge mit HPLC bestimmt wird. Die Strukturen (4a) bis (7a) sind dabei beispielhaft für die Verwendung eines Polycarbonats, umfassend Bisphenol A, angegeben. (Dies kann z.B. wie folgt geschehen: Die Polycarbonatprobe wird mittels Natriummethylat unter Rückfluss verseift. Die entsprechende Lösung wird angesäuert und zur Trockne eingeengt. Der Trocknungsrückstand wird in Acetonitril gelöst und die phenolischen Verbindungen der Formel (1a) bis (4a) mittels HPLC mit UV-Detektion bestimmt):

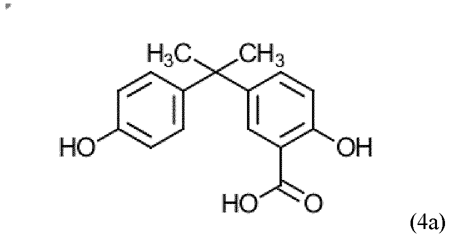

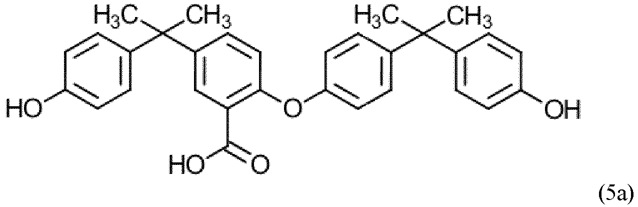

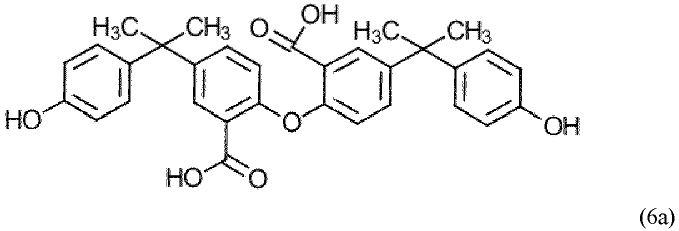

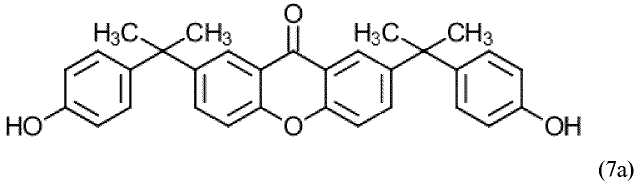

Bevorzugt beträgt die Menge der dabei freigesetzten Verbindung der Formel (4a) 20 bis 800 ppm besonders bevorzugt 25 bis 700 ppm und insbesondere bevorzugt 30 bis 500 ppm.

Bevorzugt beträgt die Menge der dabei freigesetzten Verbindung der Formel (5a) 0 (d.h. unterhalb der Nachweisgrenze von 10 ppm) bis 100 ppm besonders bevorzugt 0 bis 80 ppm und insbesondere bevorzugt 0 bis 50 ppm.

Bevorzugt beträgt die Menge der dabei freigesetzten Verbindung der Formel (6a) 0 (d.h. unterhalb der Nachweisgrenze von 10 ppm) bis 800 ppm weiter bevorzugt 10 bis 700 ppm und besonders bevorzugt 20 bis 600 ppm sowie ganz besonders bevorzugt 30 bis 350 ppm. Bevorzugt beträgt die Menge der dabei freigesetzten Verbindung der Formel (7a) 0 (d.h. unterhalb der Nachweisgrenze von 10 ppm) bis 300 ppm bevorzugt 5 bis 250 ppm und insbesondere bevorzugt 10 bis 200 ppm.

Die Herstellung derartiger Polycarbonate enthaltend die oben genannten Umlagerungsstrukturen ist beispielsweise in DE 102008019503 beschrieben.

Bevorzugt wird das Verfahren im Schmelzeumesterungsverfahren bei Temperaturen von 280 °C bis 400 °C, vorzugsweise von 290 °C bis 380 °C, weiter bevorzugt von 300 °C bis 350 °C und Drücken von 0,001 mbar bis 50 mbar bevorzugt 0,005 mbar bis 40 mbar insbesondere bevorzugt 0,02 bis 30 mbar und ganz besonders bevorzugt 0,03 bis 5 mbar bevorzugt in Gegenwart eines Katalysators durchgeführt.

Bevorzugt wird die Reaktion gemäß (i) bis (iii) im erfindungsgemäßen Verfahren in Anwesenheit mindestens eines Katalysators durchgeführt. Eine Reaktionsführung ist zwar auch ohne Katalysator prinzipiell möglich, jedoch müssen dann ggf. höhere Temperaturen oder längere Verweilzeiten in Kauf genommen werden. Katalysatoren für das Phasengrenzflächenverfahren gemäß (i) sind dem Fachmann bekannt.

Wird das erfindungsgemäße Verfahren nach dem Schmelzeumesterungsverfahren durchgeführt (siehe (ii) und (iii)) sind geeignete Katalysatoren z.B.:
Ammoniumkatalysatoren, wie beispielsweise Tetramethylammoniumhydroxid, Tetramethylammoniumacetat, Tetramethylammoniumfluorid, Tetramethylammoniumtetraphenylboranat, Dimethyldiphenylammoniumhydroxid, Tetraethylammoniumhydroxid, Cethyltrimethylammoniumtetraphenylboranat und Cethyltrimethylammoniumphenolat. Insbesondere geeignet sind außerdem Phosphoniumkatalysatoren der Formel (K): 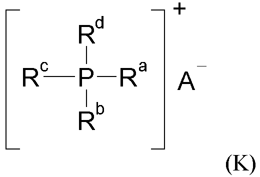 wobei R^{a}, R^{b}, R^{c} und R^{d} dieselben oder verschiedene C1-C10-Alkyle, C6-C14-Aryle, C7-C15-Arylalkyle oder C5-C6-Cycloalkyle, bevorzugt Methyl oder C6-C14-Aryle, besonders bevorzugt Methyl oder Phenyl sein können, und A⁻ ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C6-C14-Aryl, C7-C15-Arylalkyl oder C5-C6-Cycloalkyl, bevorzugt Phenyl sein kann.

Besonders bevorzugte Katalysatoren sind Tetraphenylphosphoniumchlorid, Tetraphenylphosphoniumhydroxid oder Tetraphenylphosphoniumphenolat; ganz besonders bevorzugt ist Tetraphenylphosphoniumphenolat. Besonders bevorzugt werden die Alkalimetallsalze oder Erdalkalimetallsalze dieser Ammonium- und/oder Phosphoniumkatalysatoren eingesetzt.

Der Katalysator wird bevorzugt in Mengen von 0,0001 bis 1,0 Gew.-%, bevorzugt von 0,001 bis 0,5 Gew.-%, insbesondere bevorzugt von 0,005 bis 0,3 Gew.-%, und ganz besonders bevorzugt von 0,01 bis 0,15 Gew.-%, bezogen auf das Gewicht der Formel (2) oder (2II) (je nachdem, welche verwendet wird) eingesetzt.

Der Katalysator kann allein oder als Katalysatorgemisch eingesetzt werden und in Substanz oder als Lösung, beispielsweise in Wasser oder in Phenol, z.B. als Mischkristall mit Phenol, zugesetzt werden. Er kann beispielsweise mittels Masterbatch bevorzugt mit dem der Verbindung der Formel (2II) in die Reaktion eingeführt werden oder getrennt davon bzw. noch zusätzlich hinzugefügt werden.

Ebenso ist es bevorzugt, dass die Verbindung der Formel (2II) und das Polysiloxan der Formel (1) in Anwesenheit eines organischen oder anorganischen Salzes einer schwachen Säuren mit einem pK_{A}-Wert im Bereich von 3 bis 7 (25 °C) zur Reaktion gebracht werden. Dieses Salz kann auch als Co-Katalysator bezeichnet werden. Geeignete schwache Säuren umfassen Carbonsäuren, bevorzugt C2-C22-Carbonsäuren wie beispielsweise Essigsäure, Propansäure, Ölsäure, Stearinsäure, Laurinsäure, Benzoesäure, 4-Methoxybenzoesäure, 3-Methylbenzoesäure, 4-tert-Butylbenzoesäure, p-Toluolessigsäure, 4-Hydroxybenzoesäure und Salicylsäure, Partialester von Polycarbonsäuren, wie beispielsweise Monoester der Bernsteinsäure, Partialester von Phosphorsäuren, wie beispielsweise mono-oder diorganische Phosphorsäureester, verzweigte aliphatische Carbonsäuren, wie beispielsweise 2,2-Dimethylpropionsäure, 2,2-Dimethylbutansäure, 2,2-Dimethylpentansäure und 2-Ethylhexansäure.

Geeignete organische oder anorganische Salze sind ausgewählt aus oder abgeleitet von Hydrogencarbonat, Kaliumhydrogencarbonat, Lithiumhydrogencarbonat, Natriumcarbonat, Kaliumcarbonat, Lithiumcarbonat, Natriumacetat, Kaliumacetat, Lithiumacetat, Natriumstearat, Kaliumstearat, Lithiumstearat, Natriumoleat, Kaliumoleat, Lithiumoleat, Natriumbenzoat, Kaliumbenzoat, Lithiumbenzoat, Dinatrium, Dikalium oder Dilithiumsalze von Bisphenol A. Des Weiteren können die Salze Calciumhydrogencarbonat, Bariumhydrogencarbonat, Magnesiumhydrogencarbonat, Strontiumhydrogencarbonat, Calciumcarbonat, Bariumcarbonat, Magnesiumcarbonat, Strontiumcarbonat, Calciumacetat, Bariumacetat, Magnesiumacetat, Strontiumacetat, Calciumstearat, Bariumstearat, Magnesiumstearat, Strontiumstearat und die entsprechenden Oleate umfassen. Alle diese Salze können alleine oder in beliebigen Mischungen verwendet werden.

Besonders bevorzugt ist das Salz ausgewählt aus der Gruppe, bestehend aus Alkalimetallsalzen, Erdalkalimetallsalzen und Phosphoniumsalzen von Carbonsäuren. In einer weiteren bevorzugten Ausführungsform ist das organische oder anorganische Salz von einer Carbonsäure abgeleitet.

Die organischen oder anorganischen Salze werden bevorzugt in Mengen von 0,08 bis 10 ppm und ganz besonders bevorzugt von 0,1 bis 5 ppm eingesetzt, bezogen auf das Gesamtgewicht des Polysiloxans und des organischen oder anorganischen Salzes.

In einer bevorzugten Ausführungsform ist das organische oder anorganische Salz ein Natriumsalz, bevorzugt ein Natriumsalz einer Carbonsäure. Hier wird es bevorzugt in einer solchen Menge eingesetzt, dass der Natriumgehalt in dem resultierenden Polysiloxan-Polycarbonat- Blockcokondensat in Bereich von 0,003 ppm bis 0,5 ppm liegt, basierend auf dem Gesamtgewicht des Polysiloxan-Polycarbonat- Blockcokondensats, das gebildet werden soll. Bevorzugt wird der Co-Katalysator mit einem geeigneten Lösemittel im Polysiloxan der Formel (1) zur Lösung gebracht. Der Natriumgehalt des Polysiloxan-Polycarbonat-Blockcokondensats kann beispielsweise durch Atomabsorptionsspektroskopie bestimmt werden.

Das organische oder anorganische Salz kann allein oder in beliebigen Mischungen eingesetzt werden. Es kann als Feststoff oder in Lösung zugegeben werden. In einer bevorzugten Ausführungsform wird das organische oder anorganische Salz in Form einer Mischung, enthaltend das Polysiloxan der Formel (1) und das organische oder anorganische Salz, zugegeben.

Die Katalysatoren können allein oder im Gemisch eingesetzt werden und in Substanz oder als Lösung, beispielsweise in Wasser oder in Phenol, zugesetzt werden.

Insbesondere bevorzugt wird der mindestens eine Katalysator in die Verbindung der Formel (2II) und der Co-Katalysator im Polysiloxan der Formel (1) eingemischt.

Der Katalysator wird bevorzugt in Mengen von 0,0001 bis 1,0 Gew.-% bevorzugt von 0,001 bis 0,5 Gew.-% insbesondere bevorzugt von 0,005 bis 0,3 Gew.-% und ganz besonders bevorzugt von 0,01 bis 0,15 Gew.-% bezogen auf Summe des Polysiloxans und der Verbindung der (2) oder (2II) (je nachdem, welche eingesetzt wird) eingesetzt.

Das erfindungsgemäße Verfahren ist bevorzugt dadurch gekennzeichnet, dass mindestens 50 Vol.-%, besonders bevorzugt mindestens 60 Vol.-%, ebenso bevorzugt mindestens 70 Vol.-%, ebenso bevorzugt mindestens 75 Vol.-%, ebenso bevorzugt mindestens 80 Vol.-%, ganz besonders bevorzugt mindestens 90 Vol.-% aller Siloxandomänen der Siloxandomänenverteilung des Polysiloxan-Polycarbonat-Blockcokondensats in einem Bereich von größer 0 bis 50 nm liegen, wobei die Siloxandomänenverteilung mittels Rasterkraftmikroskopie gemessen wird. Dabei handelt es sich bei den Siloxandomänenverteilung um den Durchmesser der Siloxandomänen. Dem Fachmann ist dabei ersichtlich, dass Siloxandomänen gleich 0 nm nicht vorliegen können. Dennoch existieren Auswerteprogramme, die eine Siloxandomänenverteilung von 0 (und nicht größer 0 nm) bis 50 nm berechnen. Erfindungsgemäß ist es bevorzugt, dass auch dieser Bereich von 0 bis 50 nm vom definierten Bereich "größer 0 bis 50 nm" abgedeckt ist. Ebenso weisen die Auswerteprogramme Bereiche von 50 bis 100 nm und 100 bis 200 nm auf. Hier ist jeweils ein Überlapp der Bereiche bei 50 nm und 100 nm zu sehen. Dem Fachmann ist jedoch ersichtlich (ähnlich wie bei "0 nm"), dass die Untergrenze bevorzugt zu verstehen ist als größer 50 nm bzw. größer 100 nm. Dies bedeutet, dass die drei Bereiche bevorzugt "> 0 nm bis 50 nm", "> 50 nm bis 100 nm" und "> 100 nm bis 200 nm" bedeuten. Es wurde erfindungsgemäß gefunden, dass eine sehr feine Siloxandomänenverteilung erhalten wurde. Durch den Einsatz des speziellen Polysiloxans wurde die Selbstkondensation des Polysiloxans minimiert und dadurch die Größe der Siloxandomänen ebenfalls klein gehalten.

Zur Bestimmung der Größe der Polysiloxan-Domänen werden Polymerproben bei tiefer Temperatur angeschnitten und rasterkraftmikroskopisch untersucht wie unten näher beschrieben. Bevorzugt werden dazu die im Beispielteil beschrieben Parameter und das dort beschriebene Verfahren verwendet. Dabei ist im Sinne der vorliegenden Erfindung unter dem Durchmesser einer Polysiloxan-Domäne der Durchmesser des entsprechenden flächengleichen Kreises des im Anschnitt sichtbaren Querschnitts der Polysiloxan-Domäne zu verstehen.

In einem weiteren Aspekt der vorliegenden Erfindung wird ein Polysiloxan-Polycarbonat-Blockcokondensat bereitgestellt, umfassend mindestens eine Si-O-C-Bindung, dadurch gekennzeichnet, dass mindestens 50 Vol.-%, besonders bevorzugt mindestens 60 Vol.-%, ebenso bevorzugt mindestens 70 Vol.-%, ebenso bevorzugt mindestens 75 Vol.-%, ebenso bevorzugt mindestens 80 Vol.-%, ganz besonders bevorzugt mindestens 90 Vol.-% aller Siloxandomänen der Siloxandomänenverteilung des Polysiloxan-Polycarbonat-Blockcokondensats in einem Bereich von größer 0 bis 50 nm liegen, wobei die Siloxandomänenverteilung mittels Rasterkraftmikroskopie gemessen wird. Überraschenderweise wurde gefunden, dass durch Minimierung der Selbstkondensationsneigung des Polysiloxans selbst mit Polysiloxanen, umfassend mindestens eine Si-O-C-Bindung, sehr feine Siloxandomänenverteilungen erhalten werden konnten. Damit werden SiCoPCs bereitgestellt, welche aus Polysiloxanen erhalten werden können, welche nicht aufwendig über Pd oder Pt Katalysatoren hydrosilyliert werden müssen und gleichzeitig dennoch sehr feine Siloxandomänenverteilungen aufweisen.

In einem Aspekt wird das Polysiloxan-Polycarbonat-Blockcokondensat gemäß der vorliegenden Erfindung nach dem erfindungsgemäßen Verfahren in sämtlichen Ausgestaltungen und Kombinationen von Bevorzugungen erhalten.

Bevorzugt ist das Polysiloxan-Polycarbonat-Blockcokondensat gemäß der vorliegenden Erfindung, dadurch gekennzeichnet, dass das Polysiloxan-Polycarbonat-Blockcokondensat Strukturen der Formel (1a) umfasst 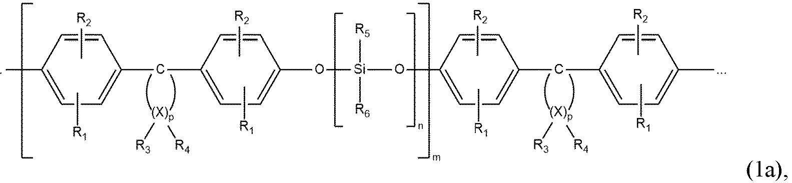
worin jedes R₁ und R₂ jeweils unabhängig voneinander für Wasserstoff, Halogen, C₁-C₈-Alkyl, C₅-C₆-Cycloalkyl, Phenyl oder C₇-C₁₂ Aralkyl steht, R₃ und R₄ für jedes X individuell wählbar sind und unabhängig voneinander für Wasserstoff oder C₁-C₆-Alkyl stehen, p eine ganze Zahl von 4 bis 7 ist und X Kohlenstoff bedeutet,
jedes R₅ und R₆ jeweils unabhängig voneinander für eine aliphatische oder eine aromatische Gruppe, bevorzugt für Methyl, Ethyl, Trimethylphenyl, - CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
n für eine durchschnittliche Anzahl von Wiederholungseinheiten von 10 bis 400, bevorzugt 10 bis 100, besonders bevorzugt 15 bis 50 steht,
m für eine für eine durchschnittliche Anzahl von Wiederholungseinheiten von 1 bis 10, bevorzugt 1 bis 6, besonders bevorzugt 1,5 bis 5 steht und
"..." für die Stellen stehen, mit denen die Struktur der Formel (1a) in das Polysiloxan-Polycarbonat-Blockcokondensat eingebunden ist.

Sämtliche Bevorzugungen in Bezug auf die Formel (1) sind auch auf die Formel (1a) in beliebigen Kombinationen anwendbar. Der Fachmann ist in der Lage, den Zusammenhang zwischen dem Polysiloxan der Formel (1) und dem SiCoPC umfassend Strukturen der Formel (1a) herzustellen. Dies insbesondere, da die Strukturen der Formel (1a) von der Formel (1) abgeleitet ist.

Es ist des Weiteren bevorzugt, dass das Polysiloxan-Polycarbonat-Blockcokondensat gemäß der vorliegenden Erfindung Strukturen der Formel (2a) umfasst 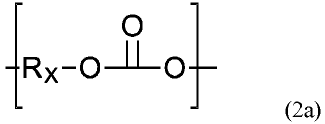 wobei jedes R_{X} unabhängig voneinander ein divalenter substituierter oder unsubstituierter aromatischer Rest ist.

Bevorzugt wird die Formel (2a) durch die Formel (2A) dargestellt, wobei 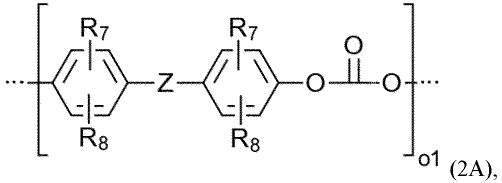
worin jedes Z in der Formel (2A) jeweils unabhängig voneinander für eine Einfachbindung, - S(=O)₂-, -C(=O)-, -O-, -S-, -S(=O)-, -CH(CN)-, eine lineare oder verzweigte C₁-C₆-Alkylengruppe, welche gegebenenfalls mindestens eine Carbonyl-Gruppe umfassen kann, gegebenenfalls mindestens ein Halogenatom aufweisen kann und/oder welche gegebenenfalls durch mindestens ein Heteroatom unterbrochen sein kann, C₂-C₁₀-Alkylidengruppe, welche gegebenenfalls mindestens eine Kohlenstoff-Kohlenstoff-Doppelbindung aufweisen kann, gegebenenfalls mindestes eine Carbonyl-Gruppe aufweisen kann und/oder gegebenenfalls mindestens ein Halogenatom aufweisen kann,
jedes R₇ und R₈ jeweils unabhängig voneinander für Wasserstoff, Halogen, C₁-C₈-Alkyl, C₅-C₆-Cycloalkyl, C₁-C₄-Alkoxy, Phenyl oder C₇-C₁₂ Aralkyl steht,
o1 für die mittlere Anzahl von Wiederholungseinheiten steht und bevorzugt 2 bis 31, besonders bevorzugt 7 bis 31 sein kann und
"..." für die Stellen stehen, mit denen die Struktur der Formel (2A) in das Polysiloxan-Polycarbonat-Blockcokondensat eingebunden ist.

Die für Formel (2), (2I) und (2II) beschriebenen Bevorzugungen von Z, R₇ und R₈ gelten jeweils auch für die Formel (2A).

Besonders bevorzugt ist das erfindungsgemäße Polysiloxan-Polycarbonat-Blockcokondensat dadurch gekennzeichnet, dass die Struktur der Formel (2a) durch die Struktur der Formel (2b) dargestellt wird 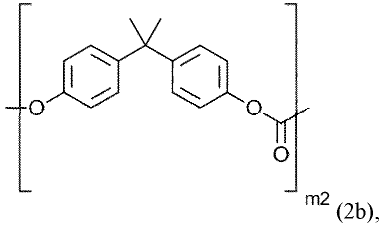 wobei m2 die durchschnittliche Anzahl an Wiederholungseinheiten angibt. In diesem Fall ist der Polycarbonatblock des SiCoPCs von Bisphenol A abgeleitet. Bevorzugt steht o in Forme (2b) für 7 bis 31, besonders bevorzugt 10 bis 29, ebenso besonders bevorzugt 15 bis 28, ganz besonders bevorzugt 19 bis 27.

Erfindungsgemäß wurde gefunden, dass der Anteil an kovalenten Bindungen zwischen den Siloxanblöcken und den Polycarbonatblöcken hoch ist. Bevorzugt ist der Anteil an kovalenten Bindungen zwischen den Siloxanblöcken und den Polycarbonatblöcken höher als wenn unter den gleichen Bedingungen ein BPA-terminertes Polysiloxan gleichen chemischen Aufbaus eingesetzt wird.

Bevorzugt beträgt der Polysiloxangehalt des erfindungsgemäßen SiCoPCs 2 bis 15 Gew.-%, besonders bevorzugt 3 bis 11 Gew.-% und ganz besonders bevorzugt 4 bis 10 Gew.-%, wobei der Polysiloxangehalt sich auf das Gesamtgewicht des Polysiloxan-Polycarbonat-Blockcopolymers bezieht.

Ebenso ist das Polysiloxan-Polycarbonat-Blockcokondensat gemäß der vorliegenden Erfindung bevorzugt dadurch gekennzeichnet, dass das Polysiloxan-Polycarbonat-Blockcokondensat ein gewichtsgemitteltes Molekulargewicht von 24.000 bis 40.000 g/mol, bevorzugt von 25.000 bis 36.000 g/mol und insbesondere bevorzugt von 26.000 bis 34.000 g/mol aufweist. Besonders bevorzugt wird dieses Molekulargewicht gemessen mittels GPC mit Polycarbonatstandard und detektiert mittels RI-Detektion. Dabei wird bevorzugt die oben genannte GPC-Methode verwendet.

Das erfindungsgemäße SiCoPC bzw. das nach dem erfindungsgemäßen Verfahren erhaltene SiCoPC kann als solches zu Formkörpern aller Art verarbeitet werden. Es kann auch mit anderen Thermoplasten und/oder Polymeradditiven zu thermoplastischen Formmassen verarbeitet werden. Die Formmassen und Formkörper sind weitere Gegenstände der vorliegenden Erfindung.

Die Polymeradditive werden bevorzugt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Farbstoffen und Pigmenten, Schlagzähigkeitsmodifikatoren sowie Füll- und Verstärkungsstoffen.

Die erfindungsgemäßen Formmassen sind thermoplastisch. Sie können beispielsweise hergestellt werden, indem man das SiCoPC und die weiteren Bestandteile in bekannter Weise vermischt und bei Temperaturen von bevorzugt 200°C bis 320°C, in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile einer solchen Zusammensetzung schmelzcompoundiert und schmelzextrudiert werden.

Die Formkörper aus dem erfindungsgemäßen SiCoPC, aus dem aus dem erfindungsgemäßen Verfahren erhaltenen SiCoPCs oder den das SiCoPC enthaltenden thermoplastischen Formmassen können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Die nach dem erfindungsgemässen Verfahren erhältlichen Polysiloxan-Polycarbonat-Blockcokondensate und die erfindungsgemäßen Polycarbonatzusammensetzungen sind überall dort verwendbar, wo die bekannten aromatischen Polycarbonate bislang Verwendung finden und wo zusätzlich gute Fliessfähigkeit gepaart mit verbesserten Entformungsverhalten und hoher Zähigkeit bei niedrigen Temperaturen und verbesserter Chemikalienresistenz erforderlich sind, wie z. B. zur Herstellung grosser Kraftfahrzeug-Aussenteile und Schaltkästen für den Ausseneinsatz, von Platten, Hohlkammerplatten, von Teilen für Elektrik und Elektronik sowie von optischen Speichern. So können die Blockkokondensate im IT-Bereich für Computergehäuse und Multimediagehäuse, Mobiltelefonschalen sowie im Haushaltsbereich wie in Wasch- oder Spülmaschinen, im Sportbereich z.B. als Material für Helme eingesetzt werden.

In einem weiteren Aspekt der vorliegenden Erfindung wird eine Verwendung eines Bisphenols der Formel (3) bereitgestellt, 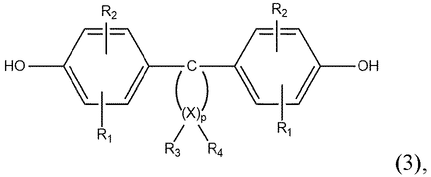
wobei R₁ und R₂ jeweils unabhängig voneinander für Wasserstoff, Halogen, C₁-C₈-Alkyl, C₅-C₆-Cycloalkyl, Phenyl oder C₇-C₁₂ Aralkyl stehen,
R₃ und R₄ für jedes X individuell wählbar sind und unabhängig voneinander für Wasserstoff oder C₁-C₆-Alkyl stehen, p eine ganze Zahl von 4 bis 7 ist und
X Kohlenstoff bedeutet
zur Terminierung eines Polysiloxans, wobei das Polysiloxan nach Reaktion mit dem Bisphenol der Formel (3) mindestens eine Si-O-C-Bindung aufweist, zur Erhöhung der Reaktivität eines terminierten Polysiloxans mit Si-O-C-Bindung bei der Reaktion mit einem Bisphenol, Oligocarbonat und/oder Polycarbonat.

Dem Fachmann ist ersichtlich, dass sämtliche oben beschriebenen Bevorzugungen in Bezug auf R₁-R₄, X und p in Formel (1) ebenfalls auf Formel (3) anwendbar sind. Ganz besonders bevorzugt handelt es sich bei Formel (3) um Formel (3a) 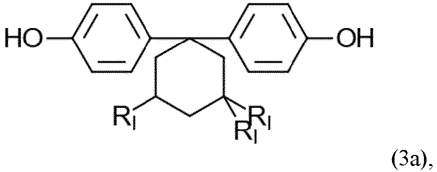 worin jedes R_{I} jeweils unabhängig voneinander für Wasserstoff oder Methyl steht. Besonders bevorzugt steht jedes R_{I} in Formel (3a) für Methyl. In diesem Fall handelt es sich um Bisphenol-TMC.

Für den Fachmann ist ebenso ersichtlich, dass Formel (3) auch durch Formel (300) dargestellt werden kann, 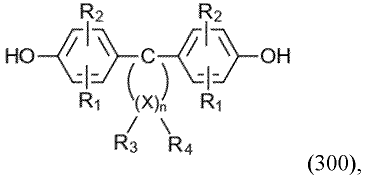
wobei R₁ und R₂ jeweils unabhängig voneinander für Wasserstoff, Halogen, C₁-C₈-Alkyl, C₅-C₆-Cycloalkyl, Phenyl oder C₇-C₁₂ Aralkyl stehen,
R₃ und R₄ für jedes X individuell wählbar sind und unabhängig voneinander für Wasserstoff oder C₁-C₆-Alkyl stehen, n eine ganze Zahl von 4 bis 7 ist und
X Kohlenstoff bedeutet.

Erfindungsgemäß wurde gefunden, dass ein Bisphenol der Formel (3) im Verhältnis zu BPA die Reaktivität eines entsprechend terminierten Polysiloxans so erhöht, dass die Selbstkondensation des resultierenden Polysiloxans minimiert werden kann. Dadurch ist ein SiCoPC mit feiner Siloxandomänenverteilung und einem erhöhten Anteil an kovalenten Bindungen zwischen den Siloxanblöcken und den Polycarbonatblöcken zugänglich.

Daher ist ein weiterer Aspekt der vorliegenden Erfindung die Verwendung eines Polysiloxans der Formel (1) 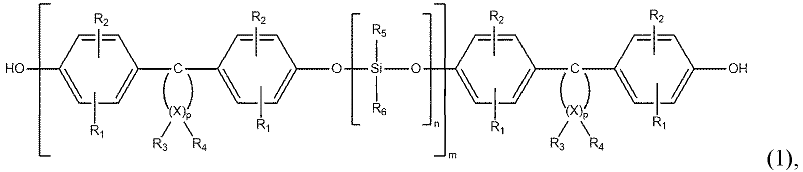
worin jedes R₁ und R₂ jeweils unabhängig voneinander für Wasserstoff, Halogen, C₁-C₈-Alkyl, C₅-C₆-Cycloalkyl, Phenyl oder C₇-C₁₂ Aralkyl steht, R₃ und R₄ für jedes X individuell wählbar sind und unabhängig voneinander für Wasserstoff oder C₁-C₆-Alkyl stehen, p eine ganze Zahl von 4 bis 7 ist und X Kohlenstoff bedeutet,
jedes R₅ und R₆ jeweils unabhängig voneinander für eine aliphatische oder eine aromatische Gruppe, bevorzugt für Methyl, Ethyl, Trimethylphenyl, - CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
n für eine durchschnittliche Anzahl von Wiederholungseinheiten von 10 bis 400, bevorzugt 10 bis 100, besonders bevorzugt 15 bis 50 steht und m für eine für eine durchschnittliche Anzahl von Wiederholungseinheiten von 1 bis 10, bevorzugt 1 bis 6, besonders bevorzugt 1,5 bis 5 steht,
bei der Herstellung eines Polysiloxan-Polycarbonat-Blockcokondensat zur Erhöhung des Anteils an kovalenten Bindungen zwischen den Siloxanblöcken und den Polycarbonatblöcken, wobei das Polysiloxan mindestens eine Si-O-C-Bindung aufweist.

Die Formel (1) wurde oben bereits in weiteren Bevorzugungen beschrieben, welche auch bei der erfindungsgemäßen Verwendung anwendbar sind. Ebenso wurde das erfindungsgemäße SiCoPC oben bereits näher beschrieben. Es wurde überraschenderweise gefunden, dass ein speziell terminierter Polysiloxanblock den Anteil an kovalenten Verbindungen zwischen den Siloxanblöcken und den Polycarbonatblöcken erhöht. Bei einem erhöhten Anteil an kovalenten Bindung zwischen diesen Blöcken kann sich eine feinere Siloxandomänenverteilung resultieren.

### Beschreibung der Figuren:

Figur 1: GPC-Kurve des Beispiels 3 mittels Triple-Detektion. Dabei ist stellt die schwarze Kurve die Kurve mit UV-Detektion dar. Die hellgraue Kurve stellt die Kurve mit IR-Detektion dar. Die mittelgraue Kurve ist die Kurve mit Brechungsindex(RI)-Detektion dar.
Figur 2: GPC-Kurve des Beispiels 4 mittels Triple-Detektion. Dabei ist stellt die schwarze Kurve die Kurve mit UV-Detektion dar. Die hellgraue Kurve stellt die Kurve mit IR-Detektion dar. Die mittelgraue Kurve ist die Kurve mit Brechungsindex(RI)-Detektion dar.

### Ausführungsbeispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### MVR

Die Bestimmung des Schmelzvolumenrate (MVR) erfolgt soweit nicht anders angegeben nach ISO 1133 (Jahr 2011) (bei 300 °C; 1,2 kg) soweit keine anderen Bedingungen beschrieben worden sind.

### Lösungsviskosität

Bestimmung der Lösungsviskosität: Die relative Lösungsviskosität (ηrel; auch als eta rel bezeichnet) wurde in Dichlormethan bei einer Konzentration von 5 g/l bei 25 °C mit einem Ubbelohdeviskosimeter bestimmt.

### Materialien:

### Bisphenol A:

Dichlorsiloxan: Poly(dimethylsiloxan), chlor-terminiert, Viskosität 20-50 cSt.; Molekulargewicht ca. 2000 - 4000 g/mol; CAS 67923-13-7; abcr GmbH; 76187 Karlsruhe, Deutschland.
Pyridin: Anhydrous, 99%, CAS 110-86-1 Sigma-Aldrich, München Deutschland,
TMC-Bisphenol: 4,4'-(3,3,5-Trimethylcyclohexyliden)-bisphenol, hergestellt durch die Covestro Deutschland AG
PC-1: lineares Bisphenol-A-Polycarbonat mit Endgruppen basierend auf Phenol mit einer Lösungsviskosität von 1.17. Dieses Polycarbonat enthält keine Additive wie UV-Stabilisatoren, Entformungsmittel oder Thermostabilisatoren. Die Herstellung des Polycarbonats erfolgte über einen Schmelzeumesterungsprozess wie in DE 102008019503 beschrieben. Das Polycarbonat weist einen Gehalt an phenolischen Endgruppen von 0,16 % auf.

### Auswertung der Siloxandomänengröße mittels Rasterkraftmikroskopie (AFM)

Die Siloxandomänengröße und Verteilung wurde mittels Rasterkraftmikroskopie ermittelt. Dazu wurde die entsprechende Probe (in Form eines Schmelzekuchens) bei tiefer Temperatur (Stickstoffkühlung) mittels eines Ultramikrotoms angeschnitten. Es wurde ein Bruker D3100 AFM-Mikroskop verwendet. Das AFM Bild wurde bei Raumtemperatur aufgenommen (25 °C, 30 % relative Feuchte). Für die Messung wurde der "Soft Intermittent Contact Mode" oder der "Tapping Mode" benutzt. Für das Abrastern der Probe wurde ein "Tapping mode Cantilver" (Nanoworld pointprobe) mit einer Federkonstante von ca. 2,8 Nm⁻¹ und einer Resonanzfrequenz von ca. 75 kHz verwendet. Die Tapping-Kraft wird durch das Verhältnis von Sollwert-Amplitude und freier Schwingungsamplitude (Amplitude der Tastspitze bei freier Schwingung in Luft) kontrolliert. Die Abtastrate wurde auf 1 Hz eingestellt. Zur Aufnahme der Oberflächenmorphologie wurden auf einer 2,5 µm x 2.5 µm Fläche Phasenkontrast- und Topographiebilder aufgenommen. Die Partikel bzw. Siloxandomänen wurden automatisch durch eine Bildauswertungsoftware Olympus SIS (Olympus Soft Imaging Solutions GmbH, 48149, Münster, Deutschland) über Hell-Dunkelkontrast ausgewertet (aus den Phasenkontrastbildern). Die Durchmesser der Partikel wurden über den Durchmesser des entsprechenden flächengleichen Kreises der längsten Ausdehnungsstrecke des Partikels bestimmt.

Mehrere Phasenkontrastaufnahmen (Anzahl der Teilchen größer 200) werden wie oben beschrieben ausgewertet. Über die Bildauswertungssoftware werden die Einzeldurchmesser klassifiziert und eine Verteilung der Durchmesser erstellt. Damit erfolgt die Zuordnung zu den einzelnen D-Werten bzw. den entsprechenden Volumenanteilen. Der D-Wert gibt den Anteil an Teilchen an, die kleiner als der angegebene Wert ist. Bei einem D90-Wert von x sind 90 % der Teilchen kleiner als x. Ferner wird aus der Verteilung der Anteil der Teilchen, welche einen Durchmesser von 0-50 nm, 50-100 nm und 100-200 nm haben, bestimmt.

### GPC:

Die Molekulargewichte wurden mittels Gel-Permeationschromatographie mit Dichlormethan als Eluent bestimmt. Als Standard wurde BPA-Polycarbonat verwendet. Es wurde das Signal des Brechungsindex-Detektor herangezogen. Die entsprechende Methode ist unter Nr. 2301-0257502-09D der Currenta GmbH & Co. OHG definiert, die jederzeit bei der Currenta angefragt werden kann. Zudem wurde zur Interpretation der GPC Ergebnisse die Detektion der Polymerprobe mittels mehrerer Detektoren vorgenommen, um sowohl die Verteilung der UV-aktiven Komponenten (Bisphenole) als auch die der nicht UV-aktiven Komponenten evaluieren zu können. Der UV-Detektor wurde dabei auf 254 nm eingestellt und war somit empfindlich für BPA-Polycarbonat; als weitere Detektoren kamen ein RI (Brechungsindex) sowie ein IR Detektor zum Einsatz. Der IR-Detektor wurde auf 1050 cm⁻¹ eingestellt und war damit sensitiv auf die Si-O-Si Streckschwingung. Damit war es möglich, parallel sowohl die Polycarbonat-enthaltenen Polymerkomponenten sowie Siloxan-haltigen Polymerkomponenten zu erkennen. Diese Art der Detektion wird im Folgenden auch "Tripledetektion" genannt.

### Beispiel 1 (Vergleichsbeispiel) Herstellung eines BPA-terminierten Siloxanblocks

Ein 250 ml Glaskolben mit Rührer und Tropftrichter wurde ausgeheizt, evakuiert und mit trockenem Argon belüftet. Es wurden 12,18 g (0,053 mol) Bisphenol A sowie 8,38 g (0,106 mol) Pyridin in 100 ml wasserfreien Dichlormethan unter Argonatmosphäre vorgelegt und unter Rühren gelöst. 20 g (Viskosität 20 - 50 cSt) Dichlorsiloxan wurden im Tropftrichter vorgelegt und bei Raumtemperatur unter starkem Rühren zur Bisphenol-A-Lösung innerhalb von 50 Minuten zugetropft. Sobald das Siloxanderivat vollständig zugegeben war, wurde noch für 1 Stunde nachgerührt.

Die Lösung wurde durch Zutropfen von 1 M Salzsäure neutralisiert und leicht sauer eingestellt (pH <4); Anschließend wurde die Lösung in einen Scheidetrichter überführt und mindestens dreimal mit entmineralisiertem Wasser gewaschen. Sollte die Lösung noch deutlich sauer reagieren, wurde so lange gewaschen, bis pH Wert annähernd eine neutrale Lösung anzeigte. Das Lösungsmittel wurde am Rotationsverdampfer entfernt, wobei eine Suspension zurückblieb. Das Rohprodukt wurde in n-Hexan aufgenommen, wobei das überschüssige BPA als Feststoff verblieb, und anschließend über Molsieb (4 A) getrocknet und filtriert. Die Lösung wurde bei <1mbar und 50°C für mindestens 0,5h maximal eingeengt und über einen 5 um Teflonfilter filtriert. Man erhielt ein farbloses Öl.

NMR: ¹H-NMR (Bruker AV III HD 600 MHz NMR spectrometer; CDCl₃): 7,06-7,10 ppm (m, 4 H), 6,78-6,81 (m, 2,18 H), 6,70-6,73 (m, 1,81 H), 1,60 ppm (s, 6,32 H), 0-0,2 ppm (m , 108,39 H).

Dies entspricht einem Aryl-terminiertem Siloxan nach Formel (10)

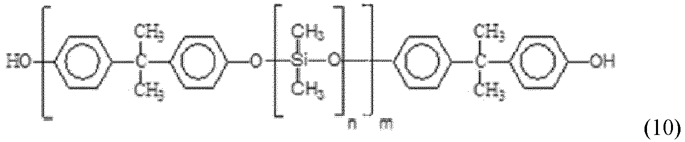

Mit n von ca. n = 30 und m von ca. m = 1,2.

### Beispiel 2 (erfindungsgemäßes Beispiel) Herstellung eines TMC BP-terminierten Siloxanblocks

Ein 250 ml Glaskolben mit Rührer und Tropftrichter wurde ausgeheizt, evakuiert und mit trockenem Argon belüftet. Es wurden 16,56 g (0,053 mol) TMC-Bisphenol sowie 8,38 g (0,106 mol) Pyridin in 100 ml wasserfreien Dichlormethan unter Argonatmosphäre vorgelegt und unter Rühren gelöst. 20 g (Viskosität 20 - 50 cSt) Dichlorsiloxan wurden im Tropftrichter vorgelegt und bei Raumtemperatur unter starkem Rühren zur Bisphenol-TMC-Lösung innerhalb von 50 Minuten zugetropft. Sobald das Siloxanderivat vollständig zugegeben war, wurde noch für 1 Stunde nachgerührt.

Die Lösung wurde durch Zutropfen von 1 M Salzsäure neutralisiert und leicht sauer eingestellt (pH <4); Anschließend wurde die Lösung in einen Scheidetrichter überführt und mindestens dreimal mit entmineralisiertem Wasser gewaschen. Sollte die Lösung noch deutlich sauer reagieren, wurde so lange gewaschen, bis pH Wert annähernd eine neutrale Lösung anzeigte. Das Lösungsmittel wurde am Rotationsverdampfer entfernt wobei eine Suspension zurückblieb. Das Rohprodukt wurde in n-Hexan aufgenommen, wobei das überschüssige BP-TMC als Feststoff verblieb, und anschließend über Molsieb (4 A) getrocknet und filtriert. Die Lösung wurde bei <1mbar und 50°C für mindestens 0,5h maximal eingeengt und über einen 5 µm Teflonfilter filtriert. Man erhielt ein farbloses Öl.

NMR: ¹H-NMR (Bruker AV III HD 600 MHz NMR spectrometer; CDCl₃): 7,19 (m, 2,0 H), 7,0 (m, 2,09 H), 6,80 (m, 1,1 H), 6,73 (m, 2,1 H), 6,65 (m, 0,9 H), 2.61 (m, 1,0 H), 2,37 (m, 1,0 H), 2,0-1,88 (m, 2,0 H), 1,36 (m, 1,0 H), 1,14 (m, 1,0 H), 0,97 (m, 6,0 H), 0,86 (m, 1,0 H), 0,36 ppm (m, 3,0 H), 0,25-0,20 (m, 7,2 H), 0,1-0,0 (m, 98,7 H).

Dies ergab ein Polysiloxan der Formel (1A) mit allen R_{I} = Methyl, n von ca. 30 und m von ca. = 1,2.

### Beispiel 3 (Vergleichsbeispiel; Herstellung von Si-haltigem Blockcokondensat mittels eines BPA-terminierten Siloxans nach Bsp 1)

In einem 250 ml Glaskolben mit Rührer, Tropftrichter und Kurzwegabscheider wurden 47,5 g PC-1 vorgelegt. Im Tropftrichter wurden 2,5 g Polydimethylsiloxan aus Beispiel 1 (5 Gew.-%) enthaltend ca. 2 ppm Natrium (in Form von 0,036 mg Natrium-2-ethylhexanoat) vorgelegt. Die Apparatur wurde evakuiert und mit Stickstoff belüftet (jeweils 3x). Das PC-1 wurde durch ein auf 350 °C vorgeheiztes Metallbad innerhalb von 5 Minuten unter Normaldruck (unter Stickstoff) aufgeschmolzen. Danach wurde Vakuum angelegt. Die Siloxan-Katalysatormischung wurde bei 100 mbar zügig hinzugetropft. Danach wurde der Druck auf das technisch mögliche Minimum, welches bei <1 mbar zu liegen hat, reduziert und bei diesem Druck 15 Minuten gerührt. Danach wurde mit Stickstoff belüftet und die Polymerschmelze entnommen. Man erhielt ein stark trübes bis opakes Polymer. Die Lösungsviskosität betrug 1,470.

### Beispiel 4 (erfindungsgemäßes Beispiel; Herstellung von Si-haltigem Blockcokondensat mittels eines TMC-terminierten Siloxans nach Beispiel 2)

In einem 250 ml Glaskolben mit Rührer, Tropftrichter und Kurzwegabscheider wurden 47,5 g PC-1 vorgelegt. Im Tropftrichter wurden 2,5 g Polydimethylsiloxan aus Beispiel 2 (5 Gew.-%) enthaltend ca. 2 ppm Natrium (in Form von 0,036 mg Natrium-2-ethylhexanoat) vorgelegt. Die Apparatur wurde evakuiert und mit Stickstoff belüftet (jeweils 3x). Das PC-1 wurde durch ein auf 350 °C vorgeheiztes Metallbad innerhalb von 5 Minuten unter Normaldruck (unter Stickstoff) aufgeschmolzen. Danach wurde Vakuum angelegt. Die Siloxan-Katalysatormischung wurde bei 100 mbar zügig hinzugetropft. Danach wurde der Druck auf das technisch mögliche Minimum, welches bei <1 mbar zu liegen hat, auf ca. 1 mbar reduziert und bei diesem Druck 15 Minuten gerührt. Danach wurde mit Stickstoff belüftet und die Polymerschmelze entnommen. Man erhielt ein leicht trübes Polymer. Die Lösungsviskosität betrug 1,436.

### AFM-Analytik mit Auswertung des Volumenanteils der Siloxandomänen

**Tabelle 1:**

| | Volumenanteil im Bereich | | | |
|---|---|---|---|---|
| | 0-50 nm | 50-100 nm | 100-200nm | D90 |
| Bsp. 3 (Vergleich) | 13 % | 76 % | 11 % | 79 nm |
| Bsp. 4 (erfindungsgemäß) | 95 % | 5 % | 0 % | 39 nm |

Man erkennt deutlich, dass die Verteilung im erfindungsgemäßen Beispiel feiner ist.

### Elugramme (GPC Analytik; Acetonextrakt)

Zur Bestimmung des Einbauverhaltens wurden die jeweiligen Polymere in Dichlormethan gelöst und in Aceton unter Rühren gefällt (Verhältnis 1Teil Dichlormethanlösung 10 Teile Aceton). Das gefällte Polymer wurde abfiltriert und die Mutterlauge zur Trockne eingeengt.

Vom Acetonextrakt (löslicher Anteil, Mutterlauge) wurde ein GPC mit Tripeldetektion aufgenommen; dabei wurde neben dem UV-Signal (schwarze Kurve) per IR-Detektor auch das Siloxansignal der Si-O Bande bei ca. 1050 cm⁻¹ (hellgraue Kurve) detektiert.

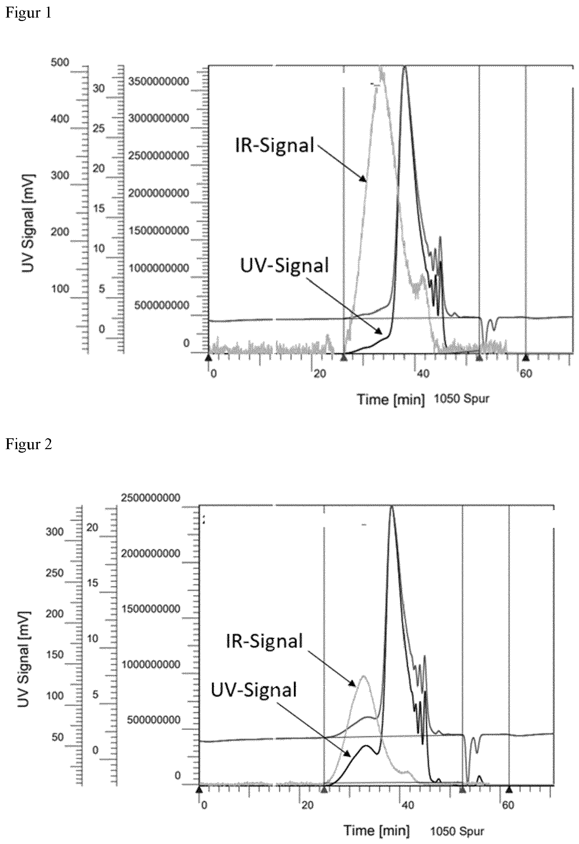

Das Ergebnis von Beispiel 3 ist in Figur 1 gezeigt. Das Ergebnis von Beispiel 4 ist in Figur 2 gezeigt. Man erkennt an Figur 1 und 2, dass im Elugramm praktisch 2 Kurven detektiert werden. Dabei entspricht die schwarze bzw. mittelgraue Kurve dem Polycarbonatanteil, welcher in Aceton löslich ist. Dies sind vor allem Polycarbonat-Oligomere mit einem Molekulargewicht zwischen 0 und 10.000 g/mol. Dieser Anteil besteht fast ausschließlich aus Polycarbonat.

Die hellgraue Kurve beschreibt den Anteil der vor allem Polydimethylsiloxan enthält. In dem Blockcokondensat nach Beispiel 3 (Figur 1) ist der Polycarbonatanteil in diesen Ketten sehr gering (siehe schwarze Kurve); dagegen ist in dem Blockcokondensat nach Beispiel 4 (Figur 2) der Anteil an Polycarbonat in den vorwiegend Polydimethylsiloxan-basierten Ketten deutlich größer. Es ist anzunehmen, dass dadurch die Kompatibilität zwischen Polydimethylsiloxan und Polycarbonat verbessert wird.

## Patentansprüche

1. Verfahren zur Herstellung eines Polysiloxan-Polycarbonat-Blockcokondensats durch Reaktion mindestens eines Polysiloxans der Formel (1) 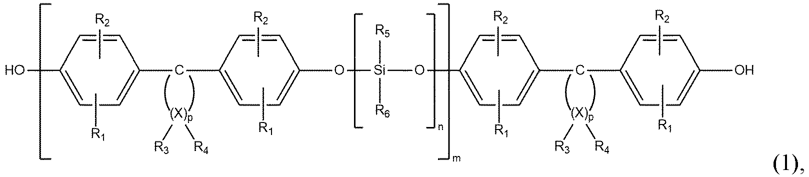
worin jedes R₁ und R₂ jeweils unabhängig voneinander für Wasserstoff, Halogen, C₁-C₈-Alkyl, C₅-C₆-Cycloalkyl, Phenyl oder C₇-C₁₂ Aralkyl steht, R₃ und R₄ für jedes X individuell wählbar sind und unabhängig voneinander für Wasserstoff oder C₁-C₆-Alkyl stehen, p eine ganze Zahl von 4 bis 7 ist und X Kohlenstoff bedeutet,
jedes R₅ und R₆ jeweils unabhängig voneinander für eine aliphatische oder eine aromatische Gruppe, bevorzugt für Methyl, Ethyl, Trimethylphenyl, - CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
n für eine durchschnittliche Anzahl von Wiederholungseinheiten von 10 bis 400, bevorzugt 10 bis 100, besonders bevorzugt 15 bis 50 steht und
m für eine für eine durchschnittliche Anzahl von Wiederholungseinheiten von 1 bis 10, bevorzugt 1 bis 6, besonders bevorzugt 1,5 bis 5 steht,
(i) mit mindestens einer Verbindung der Formel (2) und/oder (2I) in Anwesenheit mindestens einer Base und Phosgen im Phasengrenzflächenverfahren,
(ii) mit mindestens einer Verbindung der Formel (2) und mindestens einem Diarylcarbonat im Schmelzeumesterungsverfahren oder
(iii) mit mindestens einer Verbindung der Formel (2II) und gegebenenfalls mindestens einem Diarylcarbonat im Schmelzeumesterungsverfahren,
wobei 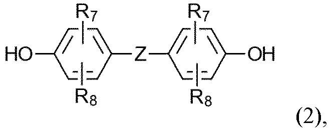 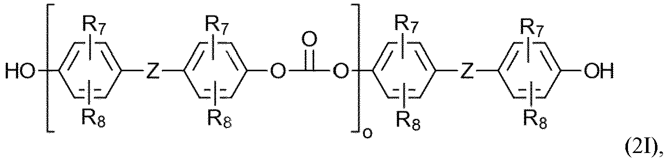 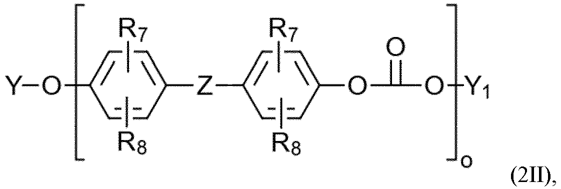
worin jedes Z in der Formel (2), (2I) oder (2II) jeweils unabhängig voneinander für eine Einfachbindung, -S(=O)₂-, -C(=O)-, -O-, -S-, -S(=O)-, - CH(CN)-, eine lineare oder verzweigte C₁-C₆-Alkylengruppe, welche gegebenenfalls mindestens eine Carbonyl-Gruppe umfassen kann, gegebenenfalls mindestens ein Halogenatom aufweisen kann und/oder welche gegebenenfalls durch mindestens ein Heteroatom unterbrochen sein kann, C₂-C₁₀-Alkylidengruppe, welche gegebenenfalls mindestens eine Kohlenstoff-Kohlenstoff-Doppelbindung aufweisen kann, gegebenenfalls mindestes eine Carbonyl-Gruppe aufweisen kann und/oder gegebenenfalls mindestens ein Halogenatom aufweisen kann,
jedes R₇ und R₈ in der Formel (2), (2I) oder (2II) jeweils unabhängig voneinander für Wasserstoff, Halogen, C₁-C₈-Alkyl, C₃-C₆-Cycloalkyl, C₁-C₄-Alkoxy, Phenyl oder C₇-C₁₂ Aralkyl steht,
o in der Formel (2I) oder (2II) für die mittlere Anzahl von Wiederholungseinheiten steht und 2 bis 40, bevorzugt 7 bis 31 sein kann,
Y in der Formel (2II) für Wasserstoff oder -(C=O)-O-Ph steht, wobei Ph für ein gegebenenfalls substituiertes Phenyl steht und
Y₁ in der Formel (2II) für gegebenenfalls substituiertes Phenyl oder eine Verbindung der Formel (2IIa) steht, wobei 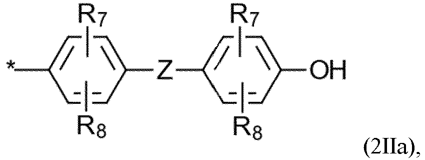
worin jedes Z, R₇ und R₈ die für die Formel (2II) gegebenen Bedeutungen hat und "*" für die Stelle steht, an der die Struktur der Formel (2IIa) als Y₁ an Formel (2II) anknüpft.

2. Verfahren nach Anspruch 1, **dadurch gekennzeichnet, dass** jedes Z in der Formel (2), (2I) oder (2II) jeweils unabhängig voneinander für eine Einfachbindung oder Isopropyliden steht und
jedes R₇ und R₈ in der Formel (2), (2I) oder (2II) jeweils unabhängig voneinander für Wasserstoff oder Methoxy, bevorzugt Wasserstoff steht.

3. Verfahren nach Anspruch 1 oder 2, **dadurch gekennzeichnet, dass** das Polysiloxan der Formel (1) (iii) mit mindestens einer Verbindung der Formel (2II) im Schmelzeumesterungsverfahren reagiert.

4. Verfahren nach einem der Ansprüche 1 bis 3, **dadurch gekennzeichnet, dass** die Verbindung der Formel (2II) eine relative Lösungsviskosität eta rel von 1,08 bis 1,22 aufweist.

5. Verfahren nach einem der Ansprüche 1 bis 4, **dadurch gekennzeichnet, dass** die Reaktion gemäß (i) bis (iii) in Anwesenheit mindestens eines Katalysators erfolgt.

6. Verfahren nach einem de Ansprüche 1 bis 5, **dadurch gekennzeichnet, dass** mindestens 50 Vol.-% aller Siloxandomänen der Siloxandomänenverteilung des Polysiloxan-Polycarbonat-Blockcokondensats in einem Bereich von größer 0 bis 50 nm liegen, wobei die Siloxandomänenverteilung mittels Rasterkraftmikroskopie gemessen wird.

7. Polysiloxan-Polycarbonat-Blockcokondensat, umfassend mindestens eine Si-O-C-Bindung, **dadurch gekennzeichnet, dass** mindestens 50 Vol.-% aller Siloxandomänen der Siloxandomänenverteilung des Polysiloxan-Polycarbonat-Blockcokondensats in einem Bereich von größer 0 bis 50 nm liegen, wobei die Siloxandomänenverteilung mittels Rasterkraftmikroskopie gemessen wird.

8. Polysiloxan-Polycarbonat-Blockcokondensat nach Anspruch 7, **dadurch gekennzeichnet, dass** das Polysiloxan-Polycarbonat-Blockcokondensat Strukturen der Formel (1a) umfasst 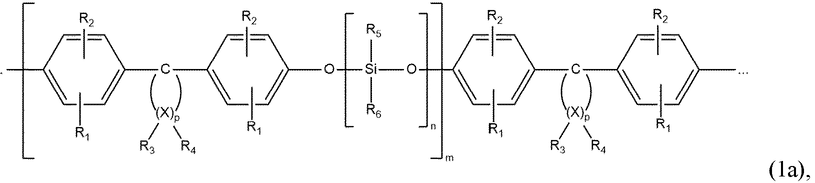
worin jedes R₁ und R₂ jeweils unabhängig voneinander für Wasserstoff, Halogen, C₁-C₈-Alkyl, C₅-C₆-Cycloalkyl, Phenyl oder C₇-C₁₂ Aralkyl steht, R₃ und R₄ für jedes X individuell wählbar sind und unabhängig voneinander für Wasserstoff oder C₁-C₆-Alkyl stehen, p eine ganze Zahl von 4 bis 7 ist und X Kohlenstoff bedeutet,
jedes R₅ und R₆ jeweils unabhängig voneinander für eine aliphatische oder eine aromatische Gruppe, bevorzugt für Methyl, Ethyl, Trimethylphenyl, - CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
n für eine durchschnittliche Anzahl von Wiederholungseinheiten von 10 bis 400, bevorzugt 10 bis 100, besonders bevorzugt 15 bis 50 steht,
m für eine für eine durchschnittliche Anzahl von Wiederholungseinheiten von 1 bis 10, bevorzugt 1 bis 6, besonders bevorzugt 1,5 bis 5 steht und
"..." für die Stellen stehen, mit denen die Struktur der Formel (1a) in das Polysiloxan-Polycarbonat-Blockcokondensat eingebunden ist.

9. Polysiloxan-Polycarbonat-Blockcokondensat nach einem der Ansprüche 7 oder 8, **dadurch gekennzeichnet, dass** das Polysiloxan-Polycarbonat-Blockcokondensat Strukturen der Formel (2a) umfasst 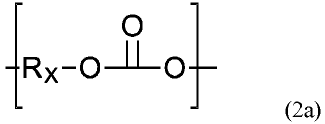 wobei jedes R_{X} unabhängig voneinander ein divalenter substituierter oder unsubstituierter aromatischer Rest ist.

10. Polysiloxan-Polycarbonat-Blockcokondensat nach Anspruch 9, **dadurch gekennzeichnet, dass** die Struktur der Formel (2a) durch die Struktur der Formel (2b) dargestellt wird 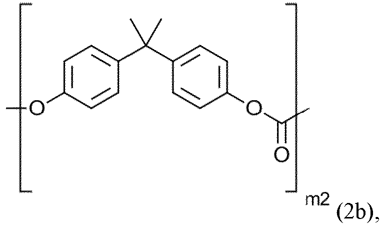 wobei m2 die durchschnittliche Anzahl an Wiederholungseinheiten angibt.

11. Polysiloxan-Polycarbonat-Blockcokondensat nach einem der Ansprüche 7 bis 10, **dadurch gekennzeichnet, dass** das Polysiloxan-Polycarbonat-Blockcokondensat ein gewichtsgemitteltes Molekulargewicht von 24.000 bis 40.000 g/ g/mol aufweist.

12. Formmasse, enthaltend das Polysiloxan-Polycarbonat-Blockcokondensat nach einem der Ansprüche 7 bis 11.

13. Formteil, enthaltend das Polysiloxan-Polycarbonat-Blockcokondensat nach einem der Ansprüche 7 bis 11.

14. Verwendung eines Bisphenols der Formel (3) 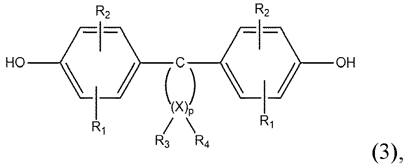
wobei R₁ und R₂ jeweils unabhängig voneinander für Wasserstoff, Halogen, C₁-C₈-Alkyl, C₃-C₆-Cycloalkyl, Phenyl oder C₇-C₁₂ Aralkyl stehen,
R₃ und R₄ für jedes X individuell wählbar sind und unabhängig voneinander für Wasserstoff oder C₁-C₆-Alkyl stehen, p eine ganze Zahl von 4 bis 7 ist und X Kohlenstoff bedeutet
zur Terminierung eines Polysiloxans, wobei das Polysiloxan nach Reaktion mit dem Bisphenol der Formel (3) mindestens eine Si-O-C-Bindung aufweist, zur Erhöhung der Reaktivität eines terminierten Polysiloxans mit Si-O-C-Bindung bei der Reaktion mit einem Bisphenol, Oligocarbonat und/oder Polycarbonat.

15. Verwendung eines Polysiloxans der Formel (1) 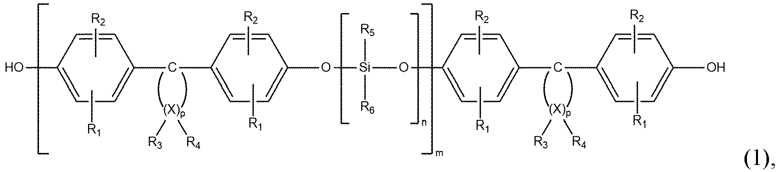
worin jedes R₁ und R₂ jeweils unabhängig voneinander für Wasserstoff, Halogen, C₁-C₈-Alkyl, C₃-C₆-Cycloalkyl, Phenyl oder C₇-C₁₂ Aralkyl steht, R₃ und R₄ für jedes X individuell wählbar sind und unabhängig voneinander für Wasserstoff oder C₁-C₆-Alkyl stehen, p eine ganze Zahl von 4 bis 7 ist und X Kohlenstoff bedeutet,
jedes R₅ und R₆ jeweils unabhängig voneinander für eine aliphatische oder eine aromatische Gruppe, bevorzugt für Methyl, Ethyl, Trimethylphenyl, - CH₂-CH₂-Phenyl, -CH₂-CH₂-CH₂-Phenyl, -CH₂-CH(CH₃)-Phenyl, -CH₂-CH₂-CH₂-(2-methoxy)Phenyl oder Phenyl steht,
n für eine durchschnittliche Anzahl von Wiederholungseinheiten von 10 bis 400, bevorzugt 10 bis 100, besonders bevorzugt 15 bis 50 steht und
m für eine für eine durchschnittliche Anzahl von Wiederholungseinheiten von 1 bis 10, bevorzugt 1 bis 6, besonders bevorzugt 1,5 bis 5 steht,
bei der Herstellung eines Polysiloxan-Polycarbonat-Blockcokondensat zur Erhöhung des Anteils an kovalenten Bindungen zwischen den Siloxanblöcken und den Polycarbonatblöcken, wobei das Polysiloxan mindestens eine Si-O-C-Bindung aufweist.

## Claims

1. Process for producing a polysiloxane-polycarbonate block co-condensate by reaction of at least one polysiloxane of formula (1) 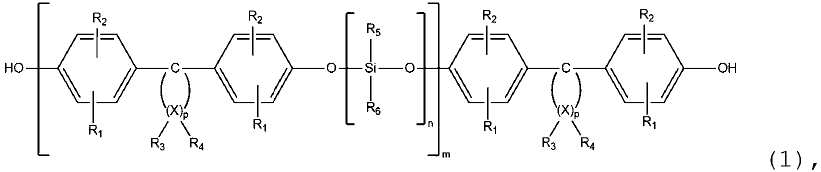
wherein each R₁ and R₂ independently represents hydrogen, halogen, C₁-C₈-alkyl, C₅-C₆-cycloalkyl, phenyl or C₇-C₁₂-aralkyl,
R₃ and R₄ are individually selectable for each X and independently represent hydrogen or C₁-C₆-alkyl, p is an integer from 4 to 7 and X represents carbon,
each R₅ and R₆ independently represents an aliphatic or an aromatic group, preferably represents methyl, ethyl, trimethylphenyl, -CH₂-CH₂-phenyl, -CH₂-CH₂-CH₂-phenyl, - CH₂-CH(CH₃)-phenyl, -CH₂-CH₂-CH₂-(2-methoxy)phenyl or phenyl,
n is an average number of repeating units from 10 to 400, preferably 10 to 100, particularly preferably 15 to 50 and
m is an average number of repeating units from 1 to 10, preferably 1 to 6, particularly preferably 1.5 to 5,
(i) with at least one compound of formula (2) and/or (2I) in the presence of at least one base and phosgene in the interfacial process,
(ii) with at least one compound of formula (2) and at least one diaryl carbonate in the melt transesterification process or
(iii) with at least one compound of formula (2II) and optionally at least one diaryl carbonate in the melt transesterification process,
wherein 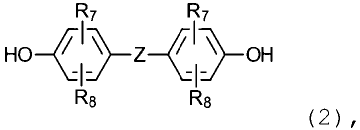 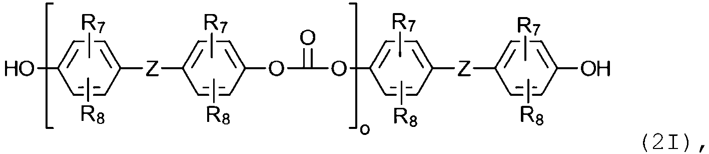 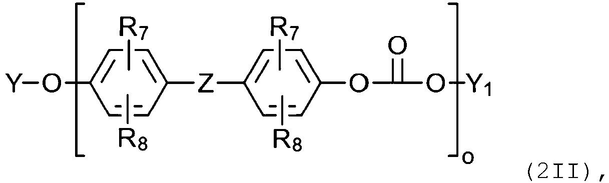
wherein each Z in formula (2), (21) or (2II) is independently a single bond, -S(=O)₂-, -C(=O)-, -O-, - S-, -S(=O)-, -CH(CN)- or a linear or branched C₁-C₆-alkylene group which may optionally comprise at least one carbonyl group, may optionally comprise at least one halogen atom and/or which may optionally be interrupted by at least one heteroatom or a C₂-C₁₀-alkylidene group which may optionally comprise at least one carbon-carbon double bond, may optionally comprise at least one carbonyl group and/or may optionally comprise at least one halogen atom,
each R₇ and R₈ in formula (2), (2I) or (211) independently represents hydrogen, halogen, C₁-C₈-alkyl, C₅-C₆-cycloalkyl, C₁-C₄-alkoxy, phenyl or C₇-C₁₂-aralkyl,
o in formula (2I) or (2II) represents the average number of repeating units and may be 2 to 40, preferably 7 to 31,
Y in formula (2II) represents hydrogen or -(C=O)-O-Ph, wherein Ph represents an optionally substituted phenyl and
Y₁ in formula (2II) represents optionally substituted phenyl or a compound of formula (2IIa), wherein 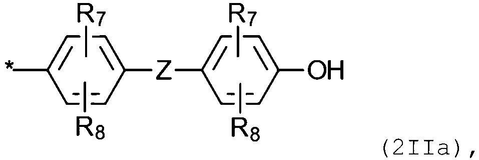
wherein each Z, R₇ and R₈ is as defined above for formula (211) and "*" represents the site at which the structure of formula (2IIa) links to formula (2II) as Y₁.

2. Process according to Claim 1, **characterized in that** each Z in formula (2), (2I) or (2II) is independently a single bond or isopropylidene and
each R₇ and R₈ in formula (2), (2I) or (2II) independently represents hydrogen or methoxy, preferably hydrogen.

3. Process according to Claim 1 or 2, **characterized in that** the polysiloxane of formula (1) is reacted (iii) with at least one compound of formula (2II) in the melt transesterification process.

4. Process according to any of Claims 1 to 3, **characterized in that** the compound of formula (2II) has a relative solution viscosity eta rel of 1.08 to 1.22.

5. Process according to any of Claims 1 to 4, **characterized in that** the reaction according to (i) to (iii) is carried out in the presence of at least one catalyst.

6. Process according to any of Claims 1 to 5, **characterized in that** at least 50% by volume of all siloxane domains in the siloxane domain distribution of the polysiloxane-polycarbonate block co-condensate are in a range from greater than 0 to 50 nm, wherein the siloxane domain distribution is measured by atomic force microscopy.

7. Polysiloxane-polycarbonate block co-condensate comprising at least one Si-O-C bond, **characterized in that** at least 50% by volume of all siloxane domains in the siloxane domain distribution of the polysiloxane-polycarbonate block co-condensate are in a range from greater than 0 to 50 nm, wherein the siloxane domain distribution is measured by atomic force microscopy.

8. Polysiloxane-polycarbonate block co-condensate according to Claim 7, **characterized in that** the polysiloxane-polycarbonate block co-condensate comprises structures of formula (1a) 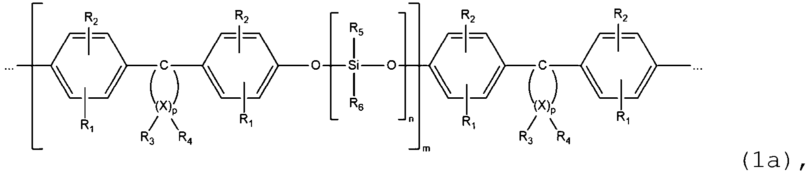
wherein each R₁ and R₂ independently represents hydrogen, halogen, C₁-C₈-alkyl, C₅-C₆-cycloalkyl, phenyl or C₇-C₁₂-aralkyl,
R₃ and R₄ are individually selectable for each X and independently represent hydrogen or C₁-C₆-alkyl, p is an integer from 4 to 7 and
X represents carbon,
each R₅ and R₆ independently represents an aliphatic or an aromatic group, preferably represents methyl, ethyl, trimethylphenyl, -CH₂-CH₂-phenyl, -CH₂-CH₂-CH₂-phenyl, - CH₂-CH(CH₃)-phenyl, -CH₂-CH₂-CH₂-(2-methoxy)phenyl or phenyl,
n is an average number of repeating units from 10 to 400, preferably 10 to 100, particularly preferably 15 to 50, m is an average number of repeating units from 1 to 10, preferably 1 to 6, particularly preferably 1.5 to 5 and "..." represents the sites at which the structure of formula (1a) is incorporated into the polysiloxane-polycarbonate block co-condensate.

9. Polysiloxane-polycarbonate block co-condensate according to either of Claims 7 or 8, **characterized in that** the polysiloxane-polycarbonate block co-condensate comprises structures of formula (2a): 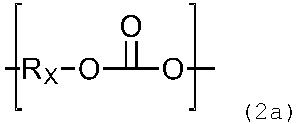 wherein each R_{X} is independently a divalent substituted or unsubstituted aromatic radical.

10. Polysiloxane-polycarbonate block co-condensate according to Claim 9, **characterized in that** the structure of formula (2a) is represented by the structure of formula (2b) 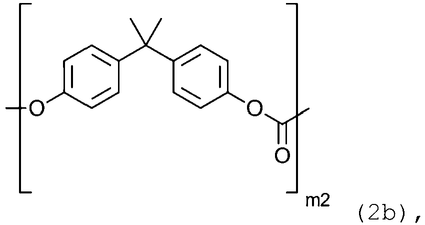 wherein m2 indicates the average number of repeating units.

11. Polysiloxane-polycarbonate block co-condensate according to any of Claims 7 to 10, **characterized in that** the polysiloxane-polycarbonate block co-condensate has a weight-average molecular weight of 24 000 to 40 000 g/ g/mol.

12. Moulding compound containing the polysiloxane-polycarbonate block co-condensate according to any of Claims 7 to 11.

13. Moulded part containing the polysiloxane-polycarbonate block co-condensate according to any of Claims 7 to 11.

14. Use of a bisphenol of formula (3) 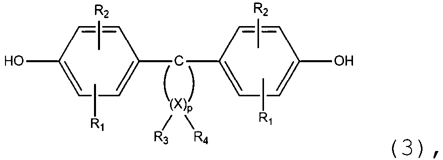
wherein R₁ and R₂ each independently represent hydrogen, halogen, C₁-C₈-alkyl, C₅-C₆-cycloalkyl, phenyl or C₇-C₁₂-aralkyl,
R₃ and R₄ are individually selectable for each X and independently represent hydrogen or C₁-C₆-alkyl, p is an integer from 4 to 7 and
X represents carbon
for terminating a polysiloxane, wherein after reaction with the bisphenol of formula (3) the polysiloxane has at least one Si-O-C bond, to increase the reactivity of a terminated polysiloxane having an Si-O-C bond in the reaction with a bisphenol, oligocarbonate and/or polycarbonate.

15. Use of a polysiloxane of formula (1) 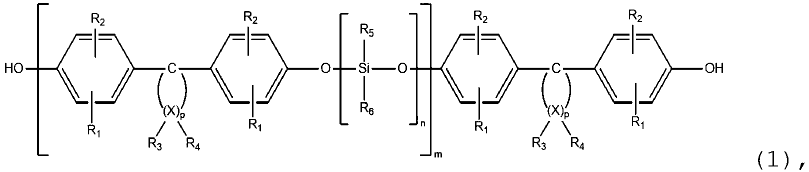
wherein each R₁ and R₂ independently represents hydrogen, halogen, C₁-C₈-alkyl, C₅-C₆-cycloalkyl, phenyl or C₇-C₁₂-aralkyl,
R₃ and R₄ are individually selectable for each X and independently represent hydrogen or C₁-C₆-alkyl, p is an integer from 4 to 7 and X represents carbon,
each R₅ and R₆ independently represents an aliphatic or an aromatic group, preferably represents methyl, ethyl, trimethylphenyl, -CH₂-CH₂-phenyl, -CH₂-CH₂-CH₂-phenyl, - CH₂-CH (CH₃) -phenyl, -CH₂-CH₂-CH₂- (2-methoxy) phenyl or phenyl,
n is an average number of repeating units from 10 to 400, preferably 10 to 100, particularly preferably 15 to 50 and
m is an average number of repeating units from 1 to 10, preferably 1 to 6, particularly preferably 1.5 to 5,
in the production of a polysiloxane-polycarbonate block co-condensate to increase the proportion of covalent bonds between the siloxane blocks and the polycarbonate blocks, wherein the polysiloxane has at least one Si-O-C bond.

## Revendications

1. Procédé de préparation d'un co-condensat séquencé de polysiloxane-polycarbonate par réaction d'au moins un polysiloxane de formule (1) 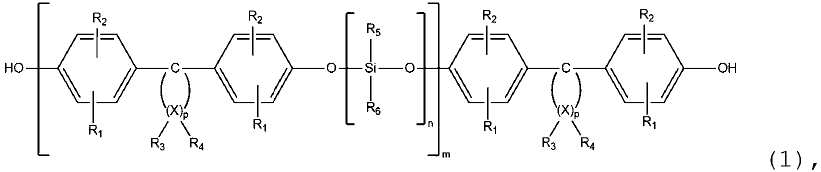
où chaque R₁ et R₂ représente respectivement, indépendamment l'un de l'autre, un atome d'hydrogène, un atome d'halogène, un alkyle en C₁-C₈, un cycloalkyle en C₅-C₆, un phényle ou un aralkyle en C₇-C₁₂,
R₃ et R₄ peuvent être sélectionnés individuellement pour chaque X et représentent, indépendamment l'un de l'autre, l'hydrogène ou un alkyle en C₁-C₆, p est un nombre entier de 4 à 7 et X est le carbone,
chaque R₅ et R₆ représente respectivement, indépendamment l'un de l'autre, un groupe aliphatique ou aromatique, de préférence un méthyle, un éthyle, un triméthylphényle, un -CH₂-CH₂-phényle, un -CH₂-CH₂-CH₂-phényle, un -CH₂-CH(CH₃)-phényle, un -CH₂-CH₂-CH₂- (2-méthoxy) phényle ou un phényle,
n représente un nombre moyen de motifs répétitifs de 10 à 400, de préférence de 10 à 100, de manière particulièrement préférée de 15 à 50, et
m représente un nombre moyen de motifs répétitifs de 1 à 10, de préférence de 1 à 6, de manière particulièrement préférée de 1,5 à 5,
(i) avec au moins un composé de formule (2) et/ou (2I) en présence d'au moins une base et de phosgène dans le procédé interfacial,
(ii) avec au moins un composé de formule (2) et au moins un carbonate de diaryle dans le procédé de transestérification à l'état fondu ou
(iii) avec au moins un composé de formule (2II) et le cas échéant au moins un carbonate de diaryle dans le procédé de transestérification à l'état fondu,
où 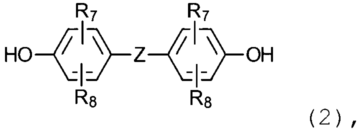 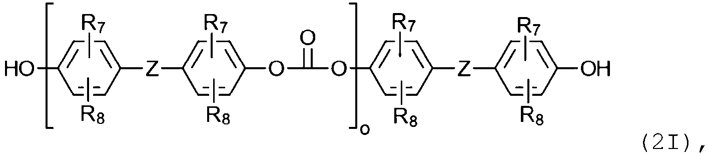 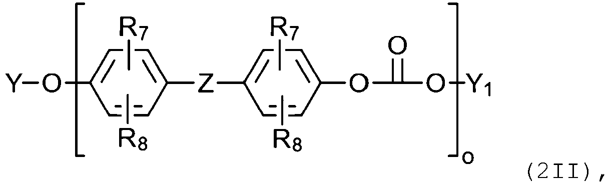
où chaque Z dans la formule (2), (2I)ou (2II) représente respectivement, indépendamment l'un de l'autre, une liaison simple, -S(=O)₂-, -C(=O)-, -O-, -S-, -S(=O)-, - CH(CN)-, un groupe alkylène en C₁-C₆ linéaire ou ramifié, qui peut le cas échéant comprendre au moins un groupe carbonyle, qui peut le cas échéant comporter au moins un atome d'halogène et/ou le cas échéant être interrompu par au moins un hétéroatome, un groupe alkylidène en C₂-C₁₀, qui peut le cas échéant comporter au moins une liaison double carbone-carbone, le cas échéant au moins un groupe carbonyle et/ou le cas échéant au moins un atome d'halogène,
chaque R₇ et R₈ dans la formule (2), (2I)ou (2II) représente respectivement, indépendamment l'un de l'autre, l'hydrogène, un halogène, un alkyle en C₁-C₈, un cycloalkyle en C₅-C₆, un alcoxy en C₁-C₄, un phényle ou un aralkyle en C₇-C₁₂,
o dans la formule (2I) ou (2II) représente le nombre moyen de motifs répétitifs et peut être compris entre 2 et 40, de préférence entre 7 et 31,
Y dans la formule (2II) est l'hydrogène ou -(C=O)-O-Ph, où Ph représente un phényle, le cas échéant substitué, et
Y₁ dans la formule (2II) représente un phényle, le cas échéant substitué, ou un composé de formule (2IIa), où 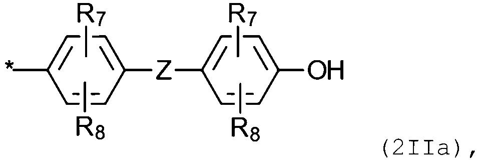
où chaque Z, R₇ et R₈ possède les significations données pour la formule (2II) et "*" représente le site où la structure de formule (2IIa) est rattachée en tant que Y₁ à la formule (2II).

2. Procédé selon la revendication 1, **caractérisé en ce que** chaque Z dans la formule (2), (2I)ou (2II) représente, indépendamment l'un de l'autre, une liaison simple ou un isopropylidène, et
chaque R₇ et R₈ dans la formule (2), (2I)ou (2II) représente respectivement, indépendamment l'un de l'autre, l'hydrogène ou un méthoxy, de préférence l'hydrogène.

3. Procédé selon la revendication 1 ou 2, **caractérisé en ce que** le polysiloxane de formule (1) (iii) réagit avec au moins un composé de formule (2II) dans le procédé de transestérification à l'état fondu.

4. Procédé selon l'une quelconque des revendications 1 à 3, **caractérisé en ce que** le composé de formule (2II) présente une viscosité relative en solution eta rel de 1,08 à 1,22.

5. Procédé selon l'une quelconque des revendications 1 à 4, dans lequel la réaction selon (i) à (iii) est effectuée en présence d'au moins un catalyseur.

6. Procédé selon l'une quelconque des revendications 1 à 5, **caractérisé en ce qu'**au moins 50 % en volume de tous les domaines de siloxane de la distribution des domaines de siloxane du co-condensat séquencé de polysiloxane-polycarbonate se situent dans une plage de plus de 0 à 50 nm, la distribution des domaines de siloxane étant mesurée au par microscopie à force atomique.

7. Co-condensat séquencé de polysiloxane-polycarbonate comprenant au moins une liaison Si-O-C, **caractérisé en ce qu'**au moins 50 % en volume de tous les domaines de siloxane de la distribution des domaines de siloxane du co-condensat séquencé de polysiloxane-polycarbonate se situent dans une plage de plus de 0 à 50 nm, la distribution des domaines de siloxane étant mesurée par microscopie à force atomique.

8. Co-condensat séquencé de polysiloxane-polycarbonate selon la revendication 7, **caractérisé en ce que** le co-condensat séquencé de polysiloxane-polycarbonate comprend des structures de formule (1a) 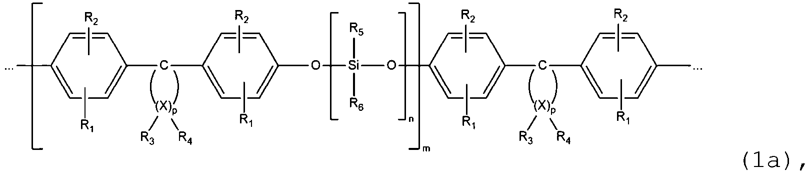
où chaque R₁ et R₂ représente respectivement, indépendamment l'un de l'autre, un atome d'hydrogène, un atome d'halogène, un alkyle en C₁-C₈, un cycloalkyle en C₅-C₆, un phényle ou un aralkyle en C₇-C₁₂,
R₃ et R₄ peuvent être sélectionnés individuellement pour chaque X et représentent, indépendamment l'un de l'autre, l'hydrogène ou un alkyle en C₁-C₆, p est un nombre entier de 4 à 7 et
X représente un carbone,
chaque R₅ et R₆ représente respectivement, indépendamment l'un de l'autre, un groupe aliphatique ou aromatique, de préférence un méthyle, un éthyle, un triméthylphényle, un -CH₂-CH₂-phényle, un -CH₂-CH₂-CH₂-phényle, un -CH₂-CH(CH₃)-phényle, un -CH₂-CH₂-CH₂- (2-méthoxy) phényle ou un phényle,
n représente un nombre moyen de motifs répétitifs de 10 à 400, de préférence de 10 à 100, de manière particulièrement préférée de 15 à 50,
m représente un nombre moyen de motifs répétitifs de 1 à 10, de préférence de 1 à 6, de manière particulièrement préférée de 1,5 à 5, et
"..." représente les sites avec lesquels la structure de formule (1a) est incorporée dans le co-condensat séquencé de polysiloxane-polycarbonate.

9. Co-condensat séquencé de polysiloxane-polycarbonate selon l'une des revendications 7 ou 8, **caractérisé en ce que** le co-condensat séquencé de polysiloxane-polycarbonate comprend des structures de formule (2a) 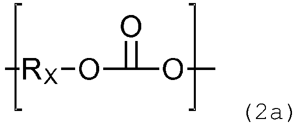 où chaque Rₓ est, indépendamment l'un de l'autre, un radical aromatique divalent substitué ou non substitué.

10. Co-condensat séquencé de polysiloxane-polycarbonate selon la revendication 9, **caractérisé en ce que** la structure de formule (2a) est représentée par la structure de formule (2b) 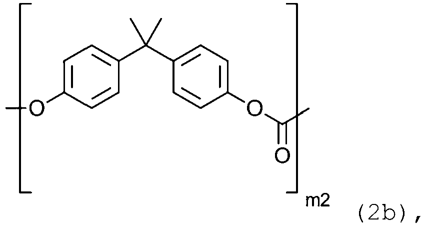 où m2 indique le nombre moyen de motifs répétitifs.

11. Co-condensat séquencé de polysiloxane-polycarbonate selon l'une quelconque des revendications 7 à 10, **caractérisé en ce que** le co-condensat séquencé de polysiloxane-polycarbonate présente une masse moléculaire moyenne en poids de 24 000 à 40 000 g/mol.

12. Masse à mouler contenant le co-condensat séquencé de polysiloxane-polycarbonate selon l'une quelconque des revendications 7 à 11.

13. Pièce moulée contenant le co-condensat séquencé de polysiloxane-polycarbonate selon l'une quelconque des revendications 7 à 11.

14. Utilisation d'un bisphénol de formule (3) 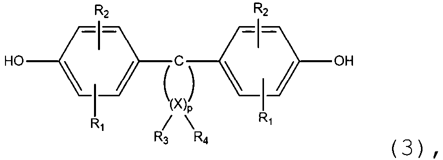
où R₁ et R₂ représentent respectivement, indépendamment l'un de l'autre, l'hydrogène, un halogène, un alkyle en C₁-C₈, un cycloalkyle en C₅-C₆, un phényle ou un aralkyle en C₇-C₁₂,
R₃ et R₄ peuvent être sélectionnés individuellement pour chaque X et représentent, indépendamment l'un de l'autre, l'hydrogène ou un alkyle en C₁-C₆, p est un nombre entier de 4 à 7 et
X représente le carbone
pour la terminaison d'un polysiloxane, le polysiloxane présentant au moins une liaison Si-O-C après réaction avec le bisphénol de formule (3), pour augmenter la réactivité d'un polysiloxane terminé avec une liaison Si-O-C lors de la réaction avec un bisphénol, un oligocarbonate et/ou un polycarbonate.

15. Utilisation d'un polysiloxane de formule (1) 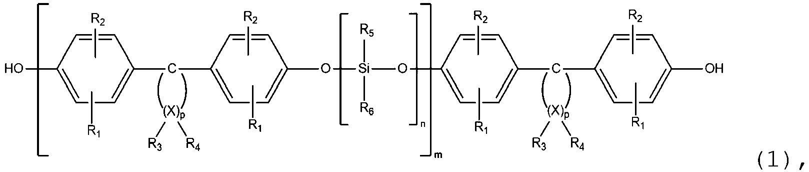
où chaque R₁ et R₂ représente respectivement, indépendamment l'un de l'autre, un atome d'hydrogène, un atome d'halogène, un alkyle en C₁-C₈, un cycloalkyle en C₅-C₆, un phényle ou un aralkyle en C₇-C₁₂,
R₃ et R₄ peuvent être sélectionnés individuellement pour chaque X et représentent, indépendamment l'un de l'autre, l'hydrogène ou un alkyle en C₁-C₆, p est un nombre entier de 4 à 7 et X est le carbone,
chaque R₅ et R₆ représente respectivement, indépendamment l'un de l'autre, un groupe aliphatique ou aromatique, de préférence un méthyle, un éthyle, un triméthylphényle, un -CH₂-CH₂-phényle, un -CH₂-CH₂-CH₂-phényle, un -CH₂-CH(CH₃)-phényle, un -CH₂-CH₂-CH₂-(2-méthoxy)phényle ou un phényle,
n représente un nombre moyen de motifs répétitifs de 10 à 400, de préférence de 10 à 100, de manière particulièrement préférée de 15 à 50, et
m représente un nombre moyen de motifs répétitifs de 1 à 10, de préférence de 1 à 6, de manière particulièrement préférée de 1,5 à 5,
dans la production d'un co-condensat séquencé de polysiloxane-polycarbonate pour augmenter la fraction de liaisons covalentes entre les séquences siloxane et les séquences polycarbonate, le polysiloxane présentant au moins une liaison Si-O-C.
